(19) **Europäisches Patentamt European Patent Office Office européen des brevets**

(11) **EP 3 876 491 B1**

(12) # EUROPÄISCHE PATENTSCHRIFT

(45) Veröffentlichungstag und Bekanntmachung des Hinweises auf die Patenterteilung:
**07.05.2025   Patentblatt 2025/19**

(21) Anmeldenummer: **21170876.3**

(22) Anmeldetag: **09.04.2018**

(51) Internationale Patentklassifikation (IPC):
**H04L 27/26** *(2006.01)*

(52) Gemeinsame Patentklassifikation (CPC):
**H04L 27/2613; H04L 27/2657; H04L 27/2675; H04L 27/2656**

(54) **SENDER UND EMPFÄNGER UND ENTSPRECHENDE VERFAHREN**

TRANSMITTER AND RECEIVER AND CORRESPONDING METHOD

ÉMETTEUR ET RÉCEPTEUR ET PROCÉDÉS CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **11.04.2017   DE 102017206259**

(43) Veröffentlichungstag der Anmeldung:
**08.09.2021   Patentblatt 2021/36**

(62) Dokumentnummer(n) der früheren Anmeldung(en) nach Art. 76 EPÜ:
**18718110.2 / 3 610 617**

(73) Patentinhaber:
- **Fraunhofer-Gesellschaft zur Förderung der angewandten Forschung e.V.
  80686 München (DE)**
- **Friedrich-Alexander-Universität Erlangen-Nürnberg
  91054 Erlangen (DE)**

(72) Erfinder:
- **Kneißl, Jakob
  91058 Erlangen (DE)**
- **Kilian, Gerd
  91058 Erlangen (DE)**
- **Bernhard, Josef
  91058 Erlangen (DE)**
- **Robert, Jörg
  91080 Uttenreuth (DE)**
- **Wechsler, Johannes
  91058 Erlangen (DE)**
- **Ereth, Stefan
  91058 Erlangen (DE)**
- **Koch, Wolfgang
  91220 Schnaittach (DE)**

(74) Vertreter: **Schlenker, Julian et al
Schoppe, Zimmermann, Stöckeler
Zinkler, Schenk & Partner mbB
Patentanwälte
Radlkoferstraße 2
81373 München (DE)**

(56) Entgegenhaltungen:
**EP-A1- 2 914 039**

- **ZH H YU ET AL: "OFDM Timing and Frequency Offset Estimation Based on Repeated Training Sequence", WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 264 - 266, XP031261247, ISBN: 978-1-4244-1311-9**
- **BYUNGJOON PARK ET AL: "A novel timing estimation method for OFDM systems", IEEE COMMUNICATIONS LETTERS, IEEE SERVICE CENTER, PISCATAWAY, NJ, US, vol. 7, no. 5, 1 May 2003 (2003-05-01), pages 239 - 241, XP011423731, ISSN: 1089-7798, DOI: 10.1109/ LCOMM.2003.812181**

- WEIBING CHEN ET AL: "A Study of OFDM Synchronization Algorithm Based on Coaxial Cable Operating at Gigabit", INTELLIGENT SYSTEM DESIGN AND ENGINEERING APPLICATION (ISDEA), 2012 SECOND INTERNATIONAL CONFERENCE ON, IEEE, 6 January 2012 (2012-01-06), pages 143 - 146, XP032154975, ISBN: 978-1-4577-2120-5, DOI: 10.1109/ISDEA.2012.705

- LUISE M ET AL: "CARRIER FREQUENCY RECOVERY IN ALL-DIGITAL MODEMS FOR BURST-MODE TRANSMISSIONS", IEEE TRANSACTIONS ON COMMUNICATIONS, IEEE SERVICE CENTER, PISCATAWAY, NJ. USA, vol. 43, no. 2/04, PART 02, 1 February 1995 (1995-02-01), pages 1169 - 1178, XP000502606, ISSN: 0090-6778, DOI: 10.1109/26.380149

**Beschreibung**

Die Erfindung bezieht sich auf einen Sender sowie auf einen Empfänger und entsprechende Verfahren zum Senden von Signalen bzw. zum Synchronisieren eines Empfängers mit einem Sender.

Bei vielen Datenübertragungssystemen werden für die Signaldetektion bzw. die Parameterschätzung Pilotsequenzen (auch Trainingssequenzen oder Synchronisationssequenzen genannt) in die zu übertragenden Datenströme eingefügt. Dabei kann es sich sowohl um die Übertragung eines ununterbrochenen Datenstroms handeln, in den in gewissen Abständen Pilotsequenzen eingestreut werden, als auch um eine paketorientierte Übertragung, bei der üblicherweise jedes Paket (auch Telegramm genannt) genau eine Pilotsequenz enthält. Die Pilotsequenz wird auch Präambel bzw. Midambel genannt, wenn sie sich am Anfang bzw. in der Mitte des Pakets befindet. Eine Pilotsequenz kann aber auch innerhalb des Pakets in Form zweier oder mehrerer Teilsequenzen verteilt sein.

In manchen auf Funk basierenden Systemen mit asynchroner Paketübertragung sind die Sendepausen erheblich länger als die jeweilige Paketdauer. In einigen Systemen wird das Telegrammsplitting (siehe [4] und [1], DE 10 2011 082 098 A1) angewendet, bei dem jedes Paket in eine Anzahl von Teilpaketen - Fragmente oder Telegramm-Fragmente genannt - aufgeteilt wird. Dabei enthält jedes Fragment in der Regel eine eigene Pilotsequenz. Das Telegrammsplitting erweist sich als besonders robust in interferenzbegrenzten Systemen, in denen eine Vielzahl von Sendern unkoordiniert Telegramme aussenden, die von einem einzelnen Empfänger empfangen und dekodiert werden sollen. Dies geschieht z. B. in Telemetriesystemen, Sensornetzen oder Anwendungen unter dem Stichwort Internet of Things (IoT).

Die Demodulation von Daten eines funkbasierten Datenübertragungssystems erfordert eine Empfängersynchronisation bestehend aus:

- Zeitsynchronisation: Schätzung der genauen zeitlichen Lage des Pakets sowie des optimalen Abtastzeitpunktes.
- Frequenzsynchronisation: Schätzung und Korrektur der Frequenzablage zwischen Sende- und Empfangsoszillator also der Frequenzdifferenz zwischen der Trägerfrequenz des Sendesignals und der Mittenfrequenz des Empfangsfilters.
- Phasensynchronisation: Schätzung der Phase nach erfolgter Frequenzkorrektur (nur erforderlich bei kohärenter Demodulation).

Bei asynchroner Paketübertragung sind diese drei Arten der Synchronisation vor der Demodulation für jedes Paket unabhängig von den vorher empfangenen Paketen durchzuführen. Zu diesem Zweck beinhaltet jedes Paket eine Pilotsequenz, mit deren Hilfe die Anfangssynchronisation (sog. "initial acquisition") durchgeführt werden kann. Darüber hinaus kann während der Datendemodulation u. U. eine Nachführung (sog. "tracking") der Parameter erforderlich sein. Im Folgenden sei das Problem der Anfangssynchronisation betrachtet.

Das Telegrammsplitting bietet den Vorteil, dass Systeme insbesondere mit einer großen Anzahl unkoordinierter Sender robust gegen Paketkollisionen ist. Für das Telegrammsplitting sind jedoch im Bereich der Synchronisation und insbesondere der Frequenzsynchronisation keine Ansätze bekannt, die zu befriedigenden Ergebnissen führen.

Die EP 2914039 A1 beschreibt eine Datensendeanordnung, wobei die Datensendeanordnung umfasst eine Energieversorgungseinrichtung zur Versorgung der Datensendeanordnung mit elektrischer Energie; eine Einrichtung zum Ermitteln von Nutzdaten, die von einem mit der Datensendeanordnung verbundenen Sensorelement bereitgestellt werden; eine Einrichtung zum kanalcodieren der Nutzdaten, um kanalcodierte Daten zu erhalten; eine Einrichtung zum Aufteilen der kanalcodierten Daten in eine Mehrzahl von Datenpaketen mit einer Coderate kleiner eins; und eine Einrichtung zum Senden von Datenpaketen, die ausgebildet ist, um die Mehrzahl von Datenpaketen mit einem zeitlichen Abstand über einen Kommunikationskanal zu senden, sofern eine von der Energieversorgungseinrichtung bereitstellbare elektrische Energiemenge zum Senden der jeweiligen Datenpakete mit einer Standardsendeleistung ausreichend ist. Dabei ist die Einrichtung zum Senden von Datenpaketen ausgebildet, um ein zum Senden anstehendes Datenpaket der Mehrzahl von Datenpaketen mit einer reduzierten Sendeleistung zu senden, falls eine von der Ener-gieversorgungseinrichtung bereitstellbare elektrischen Energiemenge zum Senden des jeweiligen Datenpakets mit der reduzierten Sendeleistung ausreichend ist, wobei die redu-zierte Sendeleistung verglichen mit der Standardsendeleistung um höchstens 40 dB reduziert ist; und/oder ein zum Senden anstehendes Datenpaket der Mehrzahl von Datenpaketen nicht zu senden oder verzögert zu senden, falls eine von der Energieversorgungseinrichtung bereitstellbare elektrische Energiemenge zum Senden des jeweiligen Datenpakets nicht ausreichend ist.

Ein Sender ist derartig ausgestaltet, mindestens ein Signal mit einer mehrere Pilotsymbole aufweisenden Pilotsequenz oder Teil-Pilotsequenz auszusenden. Dabei weist der Sender einen Signalgenerator auf, der die Pilotsequenz oder Teil-Pilotsequenz bereitstellt.

In einer Ausgestaltung ist vorgesehen, dass der Sender derartig ausgestaltet ist, mindestens ein Signal mit einer mehrere Pilotsymbole aufweisenden Pilotsequenz auszusenden. Der Signalgenerator stellt die Pilotsequenz derartig bereit, dass die Pilotsequenz mindestens zwei Symbol-Gruppen mit jeweils mindestens zwei Pilotsymbolen aufweist.

Dabei erzeugen die Symbol-Gruppen bei einer Auswertung eines in Folge der Aussendung des Signals von einem Empfänger empfangenen Signals im Hinblick auf eine Phase Phasenfehler, die von einem Zeitversatz zwischen einem Referenz-Zeitpunkt der Aussendung reduziert ist; und/oder ein zum Senden anstehendes Datenpaket der Mehrzahl von Datenpaketen nicht zu senden oder verzögert zu senden, falls eine von der Energieversorgungs-einrichtung bereitstellbare elektrische Energiemenge zum Senden des jeweiligen Datenpa-kets nicht ausreichend ist.

Die Aufgabe der Erfindung besteht darin, einen Empfänger ein Empfangsverfahren und ein entsprechendes Computerprogramm vorzuschlagen, die insbesondere Telegrammsplitting verwenden und die im Hinblick auf die Synchronisation gegenüber dem Stand der Technik verbessert sind.

Diese Aufgabe wird durch die unabhängigen Patentansprüche gelöst.

Vorteilhafte Weiterbildungen finden sich in den abhängigen Patentansprüchen.

Eine Ausgestaltung des Empfängers sieht vor, dass der Empfänger derartig ausgestaltet ist, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet und wobei die Telegramm-Fragmente kürzer sind als ein einzelnes die gesendeten Daten aufweisendes Telegramm. Zudem ergänzen sich die Teil-Pilotsequenzen zu einer Pilotsequenz. Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers. Diese Ermittlung erfolgt, indem die Signalauswertevorrichtung für jede Teil-Pilotsequenz Werte von Entscheidungsvariablen ermittelt, indem die Signalauswertevorrichtung die ermittelten Werte der Entscheidungsvariablen über die Teil-Pilotsequenzen miteinander kombiniert und mit den kombinierten Werten eine Bestimmung eines Maximum-Werts durchführt. Optional erfolgt auch ein Vergleich des Maximum-Werts mit einer Entscheidungsschwelle.

In einer Ausgestaltung ist vorgesehen, dass die Signalauswertevorrichtung für jede Teil-Pilotsequenz die Werte der Entscheidungsvariablen ermittelt, indem die Signalauswertevorrichtung für eine Mehrzahl von als Frequenzhypothesen bezeichneten Frequenzen einer komplexen Exponentialschwingung Multiplikationswerte einer Multiplikation von Abtastwerten der jeweiligen Teil-Pilotsequenz mit konjugiert komplexen Werten einer gleichen Anzahl von Referenzsymbolen einer bekannten Referenzsequenz und mit Abtastwerten der komplexen Exponentialschwingung bildet und die Multiplikationswerte aufsummiert.

Gemäß einer Ausgestaltung kombiniert die Signalauswertevorrichtung die für die Teil-Pilotsequenzen ermittelten Werte der Entscheidungsvariablen zusammen (also gemeinsam über die Teil-Pilotsequenzen) für die Teil-Pilotsequenzen miteinander, indem die Signalauswertevorrichtung die Beträge der Werte der Entscheidungsvariablen addiert.

In einer Ausgestaltung ist vorgesehen, dass die Signalauswertevorrichtung die für die Teil-Pilotsequenzen ermittelten Werte der Entscheidungsvariablen zusammen für die Teil-Pilotsequenzen miteinander kombiniert, indem die Signalauswertevorrichtung eine Summe der Beträge eines Realteils und eines Imaginärteils der Werte der Entscheidungsvariablen bildet.

Gemäß einer Ausgestaltung kombiniert die Signalauswertevorrichtung die für die Teil-Pilotsequenzen ermittelten Werte der Entscheidungsvariablen zusammen für die Teil-Pilotsequenzen miteinander, indem die Signalauswertevorrichtung die Betragsquadrate der Werte der Entscheidungsvariablen aufsummiert.

In einer Ausgestaltung ist vorgesehen, dass die Signalauswertevorrichtung die für die Teil-Pilotsequenzen ermittelten Werte der Entscheidungsvariablen zusammen für die Teil-Pilotsequenzen kohärent unter Beachtung von Betrag und Phase der Werte der Entscheidungsvariablen miteinander kombiniert.

Gemäß einer Ausgestaltung kombiniert die Signalauswertevorrichtung die ermittelten Werte der Entscheidungsvariablen unter Einbeziehung von Gewichtungsfaktoren miteinander.

In einer Ausgestaltung ist vorgesehen, dass die Signalauswertevorrichtung die ermittelten Werte der Entscheidungsvariablen unter Einbeziehung von sich jeweils auf die Teil-Pilotsequenzen beziehende Gewichtungsfaktoren miteinander kombiniert.

Gemäß einer Ausgestaltung ermittelt die Signalauswertevorrichtung die Gewichtungsfaktoren ausgehend von einem Signal-zu-Rauschen-Verhältnis des jeweiligen Telegramm-Fragments.

In einer Ausgestaltung ist vorgesehen, dass die Signalauswertevorrichtung die Gewichtungsfaktoren als proportional zu einer Wurzel aus dem Signal-zu-Rauschen-Verhältnis ermittelt.

Gemäß einer Ausgestaltung ermittelt die Signalauswertevorrichtung die Gewichtungsfaktoren als proportional zu einer Wurzel aus einem Quotienten aus dem Signal-zu-Rauschen-Verhältnis und einer Rauschleistung des jeweiligen Telegramm-Fragments ermittelt.

In einer Ausgestaltung ist vorgesehen, dass die Signalauswertevorrichtung die Gewichtungsfaktoren in Abhängigkeit von einer der Signalauswertevorrichtung zur Verfügung stehenden Rechenleistung oder in Abhängigkeit von einem Verhältnis des Signal-zu-Rauschen-Verhältnisses relativ zu einem vorgebbaren Relationswert oder in Abhängigkeit von einer Störleistung entweder als proportional zu einer Wurzel aus dem Signal-zu-Rauschen-Verhältnis oder als proportional zu einer Wurzel aus einem Quotienten aus dem Signal-zu-Rauschen-Verhältnis und einer Rauschleistung des jeweiligen Telegramm-Fragments ermittelt.

Gemäß einer Ausgestaltung ist der Empfänger derartig ausgestaltet, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet, wobei die Telegramm-Fragmente kürzer sind als ein einzelnes die gesendeten Daten aufweisendes Telegramm und wobei die Teil-Pilotsequenzen sich zu einer Pilotsequenz ergänzen. Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für jede Teil-Pilotsequenz Werte von Entscheidungsvariablen ermittelt, die ermittelten Werte der Entscheidungsvariablen über die Teil-Pilotsequenzen miteinander kombiniert und mit den kombinierten Werten eine Bestimmung eines Maximum-Werts durchführt. Dabei führt die Signalauswertevorrichtung eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert durch, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

In einer Ausgestaltung ist vorgesehen, dass der Empfänger derartig ausgestaltet ist, mindestens ein von dem Sender ausgesendetes Telegramm zu empfangen, wobei das Telegramm eine Pilotsequenz aufweist. Die Signalauswertevorrichtung ermittelt ausgehend von der Pilotsequenz und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für die Pilotsequenz Werte von Entscheidungsvariablen ermittelt, eine Bestimmung eines Maximum-Werts durchführt. Dabei führt die Signalauswertevorrichtung eine Zeitschätzung für einen Zeitversatz zwischen einem Referenz-Zeitpunkt einer Aussendung des Telegramms und einem für die Auswertung des Telegramms für den Referenz-Zeitpunkt angenommenen und/oder geschätzten Wert durch, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Gemäß einer Ausgestaltung erhält die Signalauswertevorrichtung ausgehend von dem durch die Bestimmung des Maximum-Werts und einem positiven Vergleich des Maximums-Werts mit einer Entscheidungsschwelle den Maximalwert.

In einer Ausgestaltung ist vorgesehen, dass die Signalauswertevorrichtung den Zeit-Schätzwert aus dem Maximalwert und zwei benachbarten Werten erzeugt, und dass die zwei benachbarten Werte hinsichtlich der Zeitvariable dem ermittelten Maximalwert vorangehen bzw. folgen.

Gemäß einer Ausgestaltung ermittelt die Signalauswertevorrichtung für den Maximalwert und die zwei benachbarten Werte ein Polynom. Zudem ermittelt die Signalauswertevorrichtung aus einem dem Polynom zugehörigen Extremwert den Zeit-Schätzwert.

Eine Ausgestaltung besteht darin, dass die Signalauswertevorrichtung die Interpolation mit einem Polynom zweiten Grades vornimmt.

Gemäß einer Ausgestaltung nimmt die Signalauswertevorrichtung (12) die Interpolation mit einem Polynom folgender Form vor: $y(x) = y_0 - c(x-x_0)^2$, wobei die freien Parameter $y_0$, $c$ und $x_0$ anhand des Maximalwerts und der benachbarten Werte ermittelt sind.

Einen maximalen Wert der Interpolationskurve ermittelt die Transformationsvorrichtung mit folgender Funktion:

$$x_0 = \frac{1}{2} \frac{y(1) - y(-1)}{2y(0) - y(1) - y(-1)}$$

, wobei $x_0$ ein Abszissenwert eines Maximums des Polynoms, $y(0)$ der Maximalwert und $y(-1)$ sowie $y(1)$ die benachbarten Werte sind

Als Interpolationsfunktion wird in einer Ausgestaltung ein Polynom zweiten Grades der Form $y(x) = y_0 - c(x-x_0)^2$ verwendet.

Der Abszissenwert $x_0$ des Polynommaximums stellt beispielsweise den verbesserten Zeitschätzwert dar (normiert auf das Abtastintervall $T/N$).

Aus dem Abszissenwert $x_0$ des Polynommaximums lässt sich der verbesserte Frequenzschätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases}$$

berechnen.

In einer Ausgestaltung ist vorgesehen, dass der Empfänger derartig ausgestaltet ist, mehrere von dem Sender ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender gesendete Daten beinhaltet, wobei die Telegramm-Fragmente kürzer sind als ein einzelnes die gesendeten Daten aufweisendes Telegramm und wobei die Teil-Pilotsequenzen sich zu einer Pilotsequenz ergänzen.

Die Signalauswertevorrichtung ermittelt ausgehend von den Teil-Pilotsequenzen und unter Anwendung des DFT-Verfahrens einen Wert für eine Frequenzdifferenz zwischen einer Sendefrequenz des Senders und einer Empfangsfrequenz des Empfängers. Dies geschieht, indem die Signalauswertevorrichtung für jede Teil-Pilotsequenz Werte von Entscheidungsvariablen ermittelt, die ermittelten Werte der Entscheidungsvariablen über die Teil-Pilotsequenzen miteinander kombiniert und mit den kombinierten Werten eine Bestimmung eines Maximum-Werts durchführt.

Die Signalauswertevorrichtung führt eine Frequenzschätzung für die Frequenzdifferenz durch, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt.

Gemäß einer Ausgestaltung ist der Empfänger derartig ausgestaltet, mindestens ein von dem Sender ausgesendetes Telegramm zu empfangen, wobei das Telegramm eine Pilotsequenz aufweist. Die Signalauswertevorrichtung ermittelt ausgehend von der Pilotsequenz und unter Anwendung des DFT-Verfahrens einen Wert für eine Frequenzdifferenz zwischen einer Sendefrequenz des Senders und einer Empfangsfrequenz des Empfängers, indem die Signalauswertevorrichtung für die Pilotsequenz Werte von Entscheidungsvariablen ermittelt, eine Bestimmung eines Maximum-Werts durchführt. Die Signalauswertevorrichtung ermittelt eine Frequenzschätzung für die Frequenzdifferenz durchführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert.

In einer Ausgestaltung ist vorgesehen, dass die Signalauswertevorrichtung den Maximalwert ausgehend von dem Maximum-Wert und einem positiven Vergleich des Maximum-Werts mit einer Entscheidungsschwelle erhält.

Gemäß einer Ausgestaltung erzeugt die Signalauswertevorrichtung den Frequenz-Schätzwert aus dem Maximalwert und zwei benachbarten Werten, wobei die zwei benachbarten Werte hinsichtlich der Frequenzvariable dem ermittelten Maximalwert vorangehen bzw. folgen.

In einer Ausgestaltung ist vorgesehen, dass die Signalauswertevorrichtung für den Maximalwert und die zwei benachbarten Werte ein Polynom ermittelt, und dass die Signalauswertevorrichtung aus einem dem Polynom zugehörigen Extremwert den Frequenz-Schätzwert ermittelt.

Eine Ausgestaltung besteht darin, dass die Signalauswertevorrichtung die Interpolation mit einem Polynom zweiten Grades vornimmt.

Gemäß einer Ausgestaltung nimmt die Signalauswertevorrichtung (12) die Interpolation mit einem Polynom folgender Form vor: $y(x) = y_0 - c(x-x_0)^2$, wobei die freien Parameter $y_0$, $c$ und $x_0$ anhand des Maximalwerts und der benachbarten Werte ermittelt sind.

Einen maximalen Wert der Interpolationskurve ermittelt die Transformationsvorrichtung mit folgender Funktion:

$$x_0 = \frac{1}{2}\frac{y(1)-y(-1)}{2y(0)-y(1)-y(-1)}$$, wobei $x_0$ ein Abszissenwert eines Maximums des Polynoms, $y(0)$ der Maximalwert und $y(-1)$ sowie $y(1)$ die benachbarten Werte sind

Als Interpolationsfunktion wird in einer Ausgestaltung ein Polynom zweiten Grades der Form $y(x) = y_0 - c(x-x_0)^2$ verwendet.

Der Abszissenwert $x_0$ des Polynommaximums stellt beispielsweise den verbesserten Zeitschätzwert dar (normiert auf das Abtastintervall T/N).

Aus dem Abszissenwert $x_0$ des Polynommaximums lässt sich der verbesserte Frequenzschätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases}$$

berechnen.

Gemäß einer Ausgestaltung ermittelt die Signalauswertevorrichtung den Zeit-Schätzwert und verwendet ihn für eine erneute Ermittlung der Frequenzdifferenz, indem die Signalauswertevorrichtung bei einer erneuten Ermittlung der Werte der Entscheidungsvariablen um den Zeit-Schätzwert verschobene Abtastwerte der jeweiligen Teil-Pilotsequenzen verwendet oder Referenzsymbole einer Referenzsequenz um den Zeit-Schätzwert zeitlich verschiebt.

In einer Ausgestaltung ist vorgesehen, dass die Signalauswertevorrichtung für die erneute Ermittlung der Frequenzdifferenz eine Interpolation der Abtastwerte der jeweiligen Teil-Pilotsequenzen vornimmt.

Gemäß einer Ausgestaltung führt die Signalauswertevorrichtung nach der erneuten Ermittlung der Frequenzdifferenz eine Frequenzschätzung für die Frequenzdifferenz durch, indem die Signalauswertevorrichtung ausgehend von einem durch die Bestimmung des Maximum-Werts und einem positiven Vergleich mit der Entscheidungsschwelle erhaltenen Maximalwert und mindestens einem hinsichtlich einer Frequenzvariable benachbarten Wert einen Frequenz-Schätzwert ermittelt.

Die vorgenannten Ausgestaltungen des Empfängers lassen sich auch auf das Verfahren zum Synchronisieren - ggf. als Teil eines Verfahrens zum Empfangen von Signalen - realisieren.

Eine Ausgestaltung des Verfahrens, das ergänzend oder alternativ zu den vorgenannten Ausgestaltungen ist, sieht vor,

- dass durch den Empfänger mehrere von dem Sender ausgesendete Telegramm-Fragmente empfangen werden,

  ◦ wobei die Telegramm-Fragmente jeweils eine Teil-Pilotsequenz aufweisen,
  ◦ wobei die Telegramm-Fragmente sich zu einem Telegramm ergänzen, das von dem Sender ausgesendete Daten beinhaltet,
  ◦ wobei die Telegramm-Fragmente kürzer als das Telegramm sind,
  ◦ wobei die Teil-Pilotsequenzen sich zu einer Pilotsequenz ergänzen,

- dass ausgehend von den Teil-Pilotsequenzen der Empfänger mit dem Sender synchronisiert wird,

  o wobei ausgehend von den Teil-Pilotsequenzen und unter Anwendung des DFT-Verfahrens ein Wert für eine Frequenzdifferenz zwischen einer Sendefrequenz des Senders und einer Empfangsfrequenz des Empfängers ermittelt wird,

    ▪ indem für jede Teil-Pilotsequenz Werte von Entscheidungsvariablen ermittelt werden,
    ▪ indem die ermittelten Werte der Entscheidungsvariablen über alle Teil-Pilotsequenzen miteinander kombiniert werden und
    ▪ indem mit den kombinierten Werten eine Bestimmung eines Maximum-Werts durchführt wird.

Eine Ausgestaltung sieht vor, dass durch den Empfänger mehrere von dem Sender ausgesendete Telegramm-Fragmente empfangen werden, wobei die Telegramm-Fragmente jeweils eine Teil-Pilotsequenz aufweisen, wobei die Telegramm-Fragmente sich zu einem Telegramm ergänzen, das von dem Sender ausgesendete Daten beinhaltet, wobei die Telegramm-Fragmente kürzer als das Telegramm sind, wobei die Teil-Pilotsequenzen sich zu einer Pilotsequenz ergänzen.

Ausgehend von den Teil-Pilotsequenzen wird der Empfänger mit dem Sender synchronisiert. Ausgehend von den Teil-Pilotsequenzen und unter Anwendung des DFT-Verfahrens wird ein Wert für eine Frequenzdifferenz zwischen einer Sendefrequenz des Senders und einer Empfangsfrequenz des Empfängers ermittelt, indem für jede Teil-Pilotsequenz Werte von Entscheidungsvariablen ermittelt werden, indem die ermittelten Werte der Entscheidungsvariablen über alle Teil-Pilotsequenzen miteinander kombiniert werden und indem mit den kombinierten Werten eine Bestimmung eines Maximum-Werts durchgeführt wird. Eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert wird durchführt, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Eine Ausgestaltung besteht darin, dass durch den Empfänger mindestens ein von dem Sender ausgesendetes Telegramm empfangen wird, wobei das Telegramm eine Pilotsequenz aufweist, wobei ausgehend von der Pilotsequenz der Empfänger mit dem Sender synchronisiert wird, wobei ausgehend von der Pilotsequenz und unter Anwendung des DFT-Verfahrens ein Wert für eine Frequenzdifferenz zwischen einer Sendefrequenz des Senders und einer Empfangsfrequenz des Empfängers ermittelt wird, indem für die Pilotsequenz Werte von Entscheidungsvariablen ermittelt werden, indem mit den ermittelten Werten eine Bestimmung eines Maximum-Werts durchführt wird, wobei eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert durchführt wird, indem die Signalauswertevorrichtung ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Eine Ausgestaltung sieht vor, dass durch den Empfänger mehrere von dem Sender ausgesendete Telegramm-Fragmente empfangen werden, wobei die Telegramm-Fragmente jeweils eine Teil-Pilotsequenz aufweisen, wobei die Telegramm-Fragmente sich zu einem Telegramm ergänzen, das von dem Sender ausgesendete Daten beinhaltet, wobei die Telegramm-Fragmente kürzer als das Telegramm sind, wobei die Teil-Pilotsequenzen sich zu einer Pilotsequenz ergänzen, wobei ausgehend von den Teil-Pilotsequenzen der Empfänger mit dem Sender synchronisiert wird. Ausgehend von den Teil-Pilotsequenzen und unter Anwendung des DFT-Verfahrens wird ein Wert für eine Frequenzdifferenz zwischen einer Sendefrequenz des Senders und einer Empfangsfrequenz des Empfängers ermittelt, indem für jede Teil-Pilotsequenz Werte von Entscheidungsvariablen ermittelt werden, indem die ermittelten Werte der Entscheidungsvariablen über alle Teil-Pilotsequenzen miteinander kombiniert werden und indem mit den kombinierten Werten eine Bestimmung eines Maximum-Werts durchführt wird. Eine Frequenzschätzung für die Frequenzdifferenz wird durchführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt wird.

Eine Ausgestaltung besteht darin, dass durch den Empfänger mindestens ein von dem Sender ausgesendetes Telegramm empfangen wird, wobei das Telegramm eine Pilotsequenz aufweist. Ausgehend von der Pilotsequenz wird der Empfänger mit dem Sender synchronisiert. Ausgehend von der Pilotsequenz und unter Anwendung des DFT-Verfahrens wird ein Wert für eine Frequenzdifferenz zwischen einer Sendefrequenz des Senders und einer Empfangsfrequenz des Empfängers ermittelt, indem für die Pilotsequenz Werte von Entscheidungsvariablen ermittelt werden, indem mit den ermittelten Werten eine Bestimmung eines Maximum-Werts durchführt wird. Eine Frequenzschätzung wird für die Frequenzdifferenz durchführt, indem die Signalauswertevorrichtung ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt wird.

Die obigen Ausgestaltungen des Empfängers lassen sich durch Schritte von entsprechenden Ausgestaltungen des Verfahrens realisieren, sodass hier auf eine Wiederholung der Ausführungen verzichtet sei.

Der Empfänger wendet je nach Ausgestaltung eine Methode zur Frequenzschätzung bei fragmentierter Übertragung, also bei einer Fragmentierung der Telegramme beim "Telegram Splitting" an.

Bei einer Ausgestaltung wird somit das DFT-Verfahren zur Frequenzschätzung auf Telegramm-Splitting erweitert.

In einer Ausgestaltung wird eine Kombination nach der DFT, die für die einzelnen Telegramm-Fragmente angewendet wird, und vor der Maximalwertsuche, die sich somit auf alle Telegramm-Fragmente bezieht, vorgenommen.

In einer Ausgestaltung wird die Signalverarbeitung des DFT-Verfahrens bis einschließlich der DFT auf jedes Telegramm-Fragment angewendet, um die Ergebnisse vor der Maximalwertsuche über die Frequenzhypothesen zu kombinieren. Dabei erfolgt die weitere Verarbeitung auf Basis der kombinierten Werte.

Als Vorteil ergibt sich durch die Zusammenführung eine signifikante Rauschunterdrückung, wodurch sich das Schätzergebnis für Frequenz und Zeit erheblich verbessern lässt.

In einer Ausgestaltung findet eine Kombination durch gewichtete Addition von Einzelergebnissen, z. B. der Beträge bzw. Betragsquadraten statt.

In unterschiedlichen Ausgestaltungen erfolgt eine gewichteten Addition der jeweils einzeln bestimmten Werte der Entscheidungsvariablen durch eine Addition

- der Beträge,
- der Summe der Beträge von Real- und Imaginärteil oder
- der Betragsquadrate.

Mathematisch lassen sich die Ausgestaltungen wie folgt formulieren:
Es seien $d_{i,n}[k]$ die Entscheidungsvariablen (für i = 0, 1, ..., $N_{DFT}$-1) des k-ten Abtastzeitpunktes nach der DFT des n-ten Fragments.

Dann gilt:

Addition der Beträge:

$$\left|d_i\left[k\right]\right| = \sum_{n=0}^{N_{\mathrm{frag}}-1} c_n \left|d_{i,n}\left[k\right]\right| \qquad (5)$$

Addition der Beträge von Re und Im:

$$\left|d_i\left[k\right]\right| = \sum_{n=0}^{N_{\mathrm{frag}}-1} c_n \left(\left|\mathrm{Re}\left\{d_{i,n}\left[k\right]\right\}\right| + \left|\mathrm{Im}\left\{d_{i,n}\left[k\right]\right\}\right|\right) \qquad (6)$$

Addition der Betragsquadrate:

$$\left| d_i \left[ k \right] \right|^2 = \sum_{n=0}^{N_{\text{frag}}-1} c_n^2 \left| d_{i,n} \left[ k \right] \right|^2 \qquad\qquad (7)$$

In einer Ausgestaltung ist vorgesehen, dass das Symbolraster über die Dauer aller gesendeten Fragmente konstant bleibt und der Abstand zwischen den Fragmenten (z. B. in Anzahl von Symbolintervallen) dem Empfänger bekannt ist. In diesem Fall entsprechen die k-ten Abtastwerte aus jedem Telegramm-Fragment (vom Beginn des Fragments an gezählt) einander. Ferner ist in einer Ausgestaltung vorgesehen, dass sich die Frequenzablage über die Dauer aller Fragmente nicht wesentlich verändert.

In einer Ausgestaltung erfolgt eine kohärente Kombination, d. h. eine Kombination nach Betrag und Phase der jeweils ermittelten Wert der Entscheidungsvariablen. Dies insbesondere für den Fall, dass die Träger-Phase von Telegramm-Fragment zu Telegramm-Fragment gleich bleibt, d. h. die Kohärenz muss über die Telegramm-Fragmente gegeben sein.

Die Wahl der Gewichtsfaktoren für die Addition der Werte der Entscheidungsvariablen wird in einigen Ausgestaltungen näher spezifiziert.

In einer Ausgestaltung werden die vorgenannten Gewichtsfaktoren $c_n$ proportional zur Wurzel aus dem geschätzten Signal-zu-Rauschleistungsverhältnis $SNR_n$ des n-ten Telegramm-Fragments gewählt, wobei das geschätzte SNR in einer Ausgestaltung auch die Leistung von ggf. vorhandenen Interferenzsignalen beinhaltet. Das entspricht dem Maximal Ratio Combining (MRC) bei Antennendiversität.

Im Falle von Störleistungen, die für die einzelnen Fragmente unterschiedlich sein können, sieht es eine Ausgestaltung vor, die Gewichtsfaktoren proportional zur Wurzel aus dem Verhältnis $SNR_n/P_{Nn}$ des geschätzten SNR zur geschätzten Rauschleistung $P_N$ des n-ten Telegramm-Fragments zu setzen.

Durch die Wahl der Gewichtsfaktoren wird das SNR in der Entscheidungsvariablen nach der Kombination maximiert.

Alternativ werden die obigen Gewichtsfaktoren $c_n$ gleich 1 gesetzt werden. Das entspricht dem bekannten Equal Gain Combining (EGC) bei Antennendiversität.

Eine Ausgestaltung stellt eine Verbesserung der Parameterschätzwerte dar.

Dabei findet in einer Ausgestaltung eine Verbesserung der Zeitschätzung mittels Interpolation statt.

Zur Erhöhung der Genauigkeit der Zeitschätzung sieht es eine Ausgestaltung vor, nach Ermittlung des Zeitindexes $k_0$ beim DFT-Verfahren die Zeitschätzung durch eine Interpolation zwischen dem Maximalwert (also $|d_i[k_0]|$), dem Wert davor (also $|d_i[k_0-1]|$) und dem Wert danach (also $|d_i[k_0+1]|$) zu verbessern.

Die beiden Nachbarwerte müssen denselben Frequenzindex haben wie der Maximalwert, d. h. $i = i_0[k_0]$.

Als Interpolationsfunktion wird in einer Ausgestaltung ein Polynom zweiten Grades der Form $y(x) = y_0 - c(x-x_0)^2$ verwendet.

Die freien Parameter $y_0$, c und $x_0$ werden in einer Ausgestaltung so bestimmt, dass das Polynom durch die drei Werte $y(-1) = |d_i[k_0-1]|$, $y(0) = |d_i[k_0]|$ und $y(1) = |d_i[k_0+1]|$ verläuft.

Der Abszissenwert $x_0$ des Polynommaximums stellt den verbesserten Zeitschätzwert dar (normiert auf das Abtastintervall T/N). Er lässt sich geschlossen aus den drei gegebenen y-Werten wie folgt berechnen:

$$x_0 = \frac{1}{2} \frac{y(1) - y(-1)}{2y(0) - y(1) - y(-1)} \; .$$

In einer alternativen oder ergänzenden Ausgestaltung wird eine Verbesserung der Frequenzschätzung mittels Interpolation vorgenommen.

Zur Erhöhung der Genauigkeit der Frequenzschätzung sieht es eine Ausgestaltung vor, nach Ermittlung des Zeitindexes $k_0$ die Frequenzschätzung durch eine Interpolation zwischen dem Maximalwert an der Stelle $i_0$ (also $d_{i0}[k_0]$), dem Wert für $i_0-1$ (also $d_{i0-1}[k_0]$) und dem Wert für $i_0+1$ (also $d_{i0+1}[k_0]$) zu verbessern.

Die beiden Nachbarwerte müssen von derselben DFT stammen, aus der der Maximalwert ermittelt wurde. Dies ist die DFT zum Zeitpunkt $k_0$.

Als Interpolationsfunktion wird in einer Ausgestaltung ein Polynom zweiten Grades der Form $y(x) = y_0 - c(x-x_0)^2$ verwendet. Dies entspricht dem zuvor genannten Polynom, wie es zur Verbesserung der Zeitschätzung beschrieben wurde.

Die freien Parameter $y_0$, c und $x_0$ werden so bestimmt, dass das Polynom exakt durch die drei Werte $y(-1) = |d_{i0-1}[k_0]|$, $y(0) = |d_{i0}[k_0]|$ und $y(1) = |d_{i0+1}[k_0]|$ verläuft.

Aus dem Abszissenwert $x_0$ des Polynommaximums lässt sich der verbesserte Frequenzschätzwert über

$$\hat{v}T = \frac{i_0 + x_0}{N_{FFT}} - \begin{cases} 0 & \text{für } i_0 < N_{FFT}/2 \\ 1 & \text{für } i_0 \geq N_{FFT}/2 \end{cases} \qquad (8)$$

berechnen.

**Der Wert** $x_0$ lässt sich geschlossen aus den drei gegebenen y-Werten gemäß Formel (8) berechnen.

In einer Ausgestaltung ist folgende Abfolge der Maßnahmen zur Schätzwertverbesserung vorgesehen.

Zur Optimierung von Zeit- und Frequenzschätzung ist vorgesehen, mit einem Überabtastfaktor von N = 2 in einer Ausgestaltung zu arbeiten und folgende Operationen in der angegebenen Reihenfolge durchzuführen:

1. Interpolation im Zeitbereich wie zuvor beschrieben. Ein Ergebnis ist der Zeitschätzwert $\hat{\tau}$.

2. Näherungsweise Berechnung von L neuen Abtastwerten des Signals x(t) im Symboltakt, wobei die Abtastzeitpunkte gegenüber den ursprünglichen um $\hat{\tau}$ verschoben sind. Dies geschieht zweckmäßigerweise mittels einer Interpolationsfilterung der vorhandenen Abtastwerte x[k-LN-1], x[k-LN], ..., x[k+2].

- Als Interpolationsfilter wird in einer Ausgestaltung ein FIR-Filter mit vier Koeffizienten verwendet. Dies liefert erfahrungsgemäß eine ausreichende Genauigkeit bei 2-facher Überabtastung.
- Zur Berechnung der Filterkoeffizienten sieht es eine Ausgestaltung vor, die Methode der Minimierung des mittleren quadratischen Fehlers (Minimum Mean Square Error = MMSE) zu verwenden, wobei als Berechnungsgrundlage die Faltung des Modulationsimpulses mit der Impulsantwort des Empfangsfilters dient. Bei einem matched Filter als Empfangsfilter ist dies die AKF des Modulationsimpulses.
- Die Filterkoeffizienten lassen sich a priori für ein hinreichend feines Raster von Zeitschätzhypothesen (z. B. im Raster 0.01T) berechnen und abspeichern. Zur Anwendung kommt jeweils das Filter, dessen Zeithypothese dem aktuellen Zeitschätzwert $\hat{\tau}$ am nächsten liegt.

3. Erneute Berechnung der Entscheidungsvariablen $d_i[k_0]$ auf Basis der im vorherigen Schritt interpolierten Abtastwerte. Dabei kann eine andere DFT-Länge gewählt werden.

- Da nur drei Ausgangswerte der DFT interessieren, kann diese ersetzt werden durch die dreimalige Multiplikation mit Abtastwerten dreier komplexer Exponentialschwingungen mit den Frequenzen $v_0 T - \dfrac{1}{N_{DFT}}$ , $v_0 T$ und $v_0 T + \dfrac{1}{N_{DFT}}$ , wobei die DFT-Länge beibehalten wird.

4. Polynominterpolation im Frequenzbereich wie zuvor beschrieben. Ein Ergebnis ist der Frequenzschätzwert $\hat{v}$.

5. Zur weiteren Verbesserung der Schätzwerte wird in einer weiteren Ausgestaltung anschließend eine zweite Polynominterpolation durchgeführt, die Werte verwendet, die in einem dichteren Frequenzraster liegen. Dazu müssen die DFT-Eingangswerte dreimal mit Abtastwerten dreier komplexer Exponentialschwingungen mit den Frequenzen $\hat{v}T - \Delta vT$ , $\hat{v}T$ und $\hat{v}T + \Delta vT$ multipliziert werden, wobei $\Delta \gamma T << 1/N_{DFT}$ zu wählen ist. In einer Ausgestaltung gilt:

$$\Delta vT = \frac{1}{8 N_{DFT}} .$$

Alternativ zu den Schritten 3 bis 5 wird in einer Ausgestaltung ein Verfahren zur direkten Schätzung der noch verbleibenden Frequenzablage eingesetzt. Dies ist z. B. das Verfahren nach Louise und Reggiannini.

Dazu sind nur folgende Schritte erforderlich:

3. Berechnung von L Werten gemäß

$$z[l] = x\left[k - (L-1-l)N\right]a^*[l]e^{j2\pi l v_0 T} \qquad \text{für l = 0, 1, 2, ..., L-1,} \qquad (9)$$

wobei die Abtastwerte x[.] die interpolierten Werte aus dem 2. Schritt sind. Die Multiplikation mit einer komplexen Exponentialschwingung mit der Frequenz $v_0 T$ entspricht einer Frequenzkorrektur um die Frequenz $v_0 T$.

4. Durchführung der Berechnungen gemäß den Formeln (2) und (4) mit den Werten aus Formel (9). Der Schätzwert für die gesamte Frequenzablage ergibt sich dann aus der Summe von $v_0 T$ und dem Schätzwert aus Formel (4).

Weiterhin bezieht sich die Erfindung auf ein System zur Signalübertragung, das mindestens einen Sender nach einem der oben diskutierten Ausgestaltungen und mindestens einen Empfänger nach einem der obigen Ausgestaltungen aufweist.

Schließlich bezieht sich die Erfindung auf ein Computerprogramm mit einem Programmcode zur Durchführung des vorgenannten Verfahrens nach einer der obigen Ausgestaltungen.

Im Einzelnen gibt es eine Vielzahl von Möglichkeiten, den Sender, den Empfänger, das System sowie die entsprechenden Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1    eine schematische Darstellung einer Signalverarbeitung zur Zeit- und Frequenzschätzung,

Fig. 2    eine Darstellung eines MSK-Basisband-Signals für drei positiv gemappte Symbole,

Fig. 3    eine Darstellung eines MSK-Basisband-Signals bei idealem Zeitversatz,

Fig. 4    eine Darstellung eines MSK-Basisband-Signals bei negativem Zeitversatz,

Fig. 5    einen Verlauf der Symbolamplitude nach der Matched Filterung über dem Zeitversatz,

Fig. 6    einen Verlauf des Phasenoffsets des in der Fig. 5 betrachteten Symbols über dem Zeitversatz nach der Matched Filterung und der Multiplikation mit dem konjugiert komplexen des Referenzsymbols,

Fig. 7    eine Darstellung eines MSK-Basisband-Signal für drei Symbole, wobei das letzte Symbol negativ gemappt ist,

Fig. 8    einen Verlauf der Symbolamplitude aus Fig. 7 nach der Matched Filterung über dem Zeitversatz,

Fig. 9    einen Verlauf des Phasenoffsets des in der Fig. 8 betrachteten Symbols über dem Zeitversatz nach der Matched Filterung und der Multiplikation mit dem konjugiert komplexen des Referenzsymbols,

Fig. 10    eine schematische Darstellung eines Kommunikationssystem mit einem Sender und einem Empfänger,

Fig. 11    eine schematische Darstellung eines Beispiels einer verwendeten Modulation und

Fig. 12    eine Verdeutlichung einer Interpolation durch ein Polynom zweiten Grades.

Beim Telegrammsplitting (siehe z. B. DE 10 2011 082 098 A1) werden zu übertragende Daten nicht in einem Datenpaket versendet, sondern es werden mehrere Datenpakete erzeugt, die ggf. mit unterschiedlichen Frequenzen und zu unterschiedlichen Zeiten ausgesendet werden. Aus einem Telegramm werden somit mehrere Telegramm-Fragmente erzeugt. Dabei verfügt jedes Telegramm-Fragment über eine Pilotsequenz, die der Synchronisierung zwischen Sender und Empfänger dient. Die Pilotsequenzen sind dabei in einer Ausgestaltung identisch und in einer anderen Ausgestaltung unterschiedlich zueinander.

Eine Pilotsequenz besteht im Allgemeinen aus einer Anzahl L Modulationssymbolen (im Folgenden auch Pilotsymbole genannt). Sie wird üblicherweise kompakt entweder am Anfang (Präambel) oder in der Mitte (Midambel) des Telegramms bzw. des Telegramm-Fragments übertragen. Sie kann aber auch in zwei oder mehrere Segmente zerlegt werden, zwischen denen Datensymbole übertragen werden. Es ist gängige Praxis, die Pilotsymbole demselben Modulationsalphabet wie die Datensymbole zu entnehmen (z. B. multiple phase-shift keying, M-PSK, oder M-ary Quadrature Amplitude Modulation, M-QAM). Die Pilotsymbole sind dem Empfänger vorab bekannt bzw. sind beispielsweise passend hinterlegt.

In Empfängern ist es üblich, das Empfangssignal nach einer Bandpassfilterung ins Basisband herunterzumischen und mittels eines Analog-Digital-Konverters (ADC) zeitlich äquidistant abzutasten und zu quantisieren. Jeder Abtastwert ist komplex-wertig und besteht aus einem Real- und einem Imaginärteil. Die Abtastung erfolgt dabei mindestens im Symboltakt oder einem Vielfachen davon (sog. Überabtastung).

Für die für die Synchronisation erforderliche Zeitschätzung und Frequenzschätzung sind mehrere Verfahren bekannt, die im Folgenden beschrieben werden.

DFT-Verfahren:

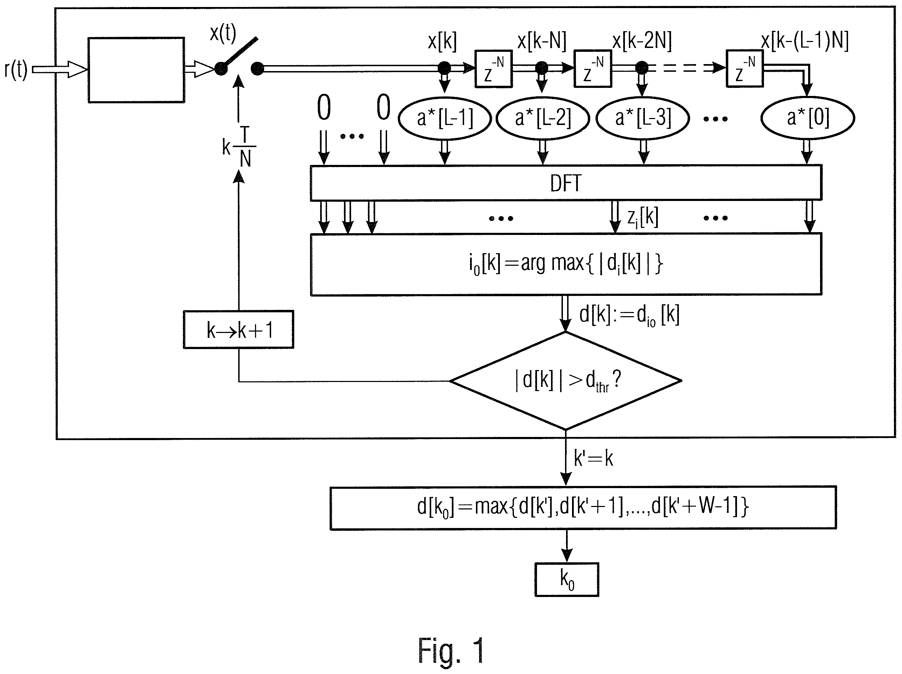

In [9] wird ein Verfahren beschrieben, das auch für große Frequenzablagen geeignet ist. Die Frequenzablage ist dabei die Frequenzdifferenz zwischen der Trägerfrequenz des Sendesignals und der Mittenfrequenz des Empfangsfilters. Die wesentlichen Signalverarbeitungsschritte werden in Fig. 1 veranschaulicht.

Dabei ist T der Symbolabstand bzw. ist 1/T die Symbolrate. N ist der Überabtastfaktor und k*T/N bezeichnet den Zeitpunkt des k-ten Abtastwertes. Die Pilotsymbole werden mit a[0], a[1], ..., a[L-1] bezeichnet, wobei a[0] zuerst und a[L-1] zuletzt gesendet wird. Das hochgestellte Zeichen * zeigt an, dass der konjugiert komplexe Wert zu verwenden ist. Das Verzögerungselement wird mit $z^{-N}$ bezeichnet, wobei es sich um die Verzögerung um N Abtastwerte handelt. Weiterhin ist W die Fensterlänge zur Maximalwertsuche in Anzahl der Abtastwerte.

Zeitvariable in runden Klammern sind stets zeitkontinuierlich, z. B. bezeichnet r(t) das zeitkontinuierliche Empfangssignal. Demgegenüber sind Zeitvariable in eckigen Klammern zeitdiskret und stellen üblicherweise eine fortlaufende Nummerierung von Abtastwerten dar. So bezeichnet z. B. x[k] den k-ten Wert des (zeit-kontinuierlichen) Signals x(t) nach dem Empfangsfilter.

Das Signal wird nach dem Empfangsfilter, der aus dem Signal r(t) das Signal x(t) erzeugt, mit N Werten pro Symbol zeitlich äquidistant abgetastet und quantisiert. Zu jedem Zeitpunkt k werden L Abtastwerte im Symbolabstand (d. h. jeder N-te Abtastwert) entnommen und zunächst mit den L konjugiert komplexen Pilotsymbolen multipliziert. Diese werden mit den Abtastwerten einer komplexen Exponentialschwingung multipliziert und anschließend aufsummiert. Der letzte Vorgang wird mehrfach für verschiedene Frequenzen dieser Schwingung, die als Frequenzhypothesen bezeichnet werden, durchgeführt. Für äquidistante Frequenzhypothesen entspricht dies der diskreten Fourier-Transformation (DFT) der L Produkte x[k]a*[L-1], x[k-N]a*[L-2] bis x[k-(L-1)N]a*[0].

Die DFT lässt sich besonders effizient mit dem bekannten Algorithmus der schnellen Fourier-Transformation (FFT) durchführen, sofern L eine Zweierpotenz ist. Falls L keine Zweierpotenz ist, rundet man die DFT-Länge auf die nächst höhere Zweierpotenz auf und ergänzt die L Werte um entsprechend viele Nullen, sodass eine FFT angewendet werden kann. Zur Erhöhung der Genauigkeit der Frequenzschätzung können die L FFT-Eingangswerte noch durch eine beliebige Anzahl weiterer Nullen ergänzt werden.

Jede Frequenzhypothese liefert einen komplexen Wert, der mit $d_i[k]$ bezeichnet und als Entscheidungsvariable bezeichnet sei. Dabei verweist der Index i auf die i-te Frequenz. Für jeden Zeitschritt k wird das Maximum des Betrages $|d_i[k]|$ über alle Frequenzindices i bestimmt. Der zum Maximum gehörende Frequenzindex wird mit $i_0$ bezeichnet. Liegt dieses Maximum über einer Entscheidungsschwelle $d_{thr}$, so gilt eine Pilotsequenz (alternativ auch als Trainingssequenz bezeichnet) als erkannt. Der zugehörige Zeitindex sei mit k' bezeichnet. Im positiven Fall, dass das Maximum über der Entscheidungsschwelle liegt, wird somit k' gleich k gesetzt. Im negativen Fall wird k erhöht (aus k wird k + 1, Fig. 1). Der Vergleich mit der Entscheidungsschwelle ist dabei jeweils optional.

Es ist bekannt, dass zur genaueren Zeitlageschätzung eine weitere Analyse des Empfangssignals notwendig ist.

Eine Weiterverarbeitung ist folgende:

Es werden die Entscheidungsvariablen zum Zeitpunkt k' und für jeden auf k' folgenden Zeitpunkt analysiert und das Betragsmaximum innerhalb eines Zeitfenster gegebener Dauer bestimmt. Der zu diesem Maximum gehörende Zeitindex sei mit $k_0$ bezeichnet.

Die zum Index $i_0[k_0]$ gehörende Frequenz stellt bereits eine grobe Schätzung der Frequenzablage dar. Sie sei mit $v_0$ bezeichnet und ist gegeben durch

$$v_0 T = \frac{i_0}{N_{\text{DFT}}} - \begin{cases} 0 & \text{für } i_0 < N_{\text{DFT}}/2 \\ 1 & \text{für } i_0 \geq N_{\text{DFT}}/2 \end{cases} \tag{1}$$

Bei additiven Gauß'schen Störungen ist das DFT-Verfahren im Sinne der Maximum Likelihood-Schätzung optimal. Es ist anwendbar für Frequenzablagen bis nahezu der halben Symbolrate. Die Schätzgenauigkeit ist im Wesentlichen durch den Überabtastfaktor N und die DFT-Länge NDFT begrenzt. Für großes N und großes NDFT kommt der mittlere quadratische Schätzfehler sowohl für Zeit als auch für Frequenz nahe an die theoretisch erreichbar Grenze heran (Cramer-Rao-Schranke). Das Verfahren ist für beliebige Pilotsequenzen anwendbar.

Frequenzschätzung nach Luise und Reggiannini:

Der Schätzer nach Luise und Reggiannini basiert auf folgenden Werten:

$$R[\lambda] = \frac{1}{L-\lambda} \sum_{l=0}^{L-\lambda-1} z[l+\lambda] z^*[l] \text{ für } \lambda = 0, 1, ..., \Lambda \tag{2}$$

mit

$$z[l] = x[k-(L-1-l)N]a^*[l] \tag{3}$$

Der Frequenzschätzwert ergibt sich aus:

$$\hat{v}T = \frac{1}{\pi(\Lambda+1)} \arg\left\{\sum_{\lambda=1}^{\Lambda} R[\lambda]\right\} \tag{4}$$

Der Schätzer hat folgende Eigenschaften:

- Er ist innerhalb des nutzbaren Schätzbereichs auch für niedriges $E_S/N_0$ - also Energie pro Symbol als Maß für die Signal-zu-Rauschen-Verhältnis - als spektrale Rauschleistungsdichte erwartungstreu.
- Für $\Lambda = L/2$ und $E_S/N_0 > 0$ dB liegt der Schätzer dicht an der der Cramer-Rao-Schranke und für die Frequenzablage Null genau auf der Cramer-Rao-Schranke. Man kann ihn als optimal bezeichnen.

$$|vT| \leq \frac{0,85}{\Lambda+1}$$

- Der Schätzbereich ist beschränkt auf: .

Eine Nachteil ist, dass vor der Anwendung eine hinreichend genaue Zeitsynchronisation erforderlich ist. Ein weiterer Nachteil ist, dass das Verfahren wegen des eingeschränkten Schätzbereichs nicht geeignet für große Frequenzablagen ist.

Die Phasenschätzung lässt sich, wie im Folgenden beschrieben wird, verbessern.

Für die datengestützte Phasenversatzschätzung in kohärenten Empfängern werden in der Regel die Synchronisationssymbole, welche in einem übertragenen Paket vorhanden sind, eingesetzt. Es werden also die Pilotsymbole der Pilotsequenzen verwendet. Dabei werden die Phasen der empfangenen Symbole mit den erwarteten Phasen (Referenzsymbole) verglichen. Die Differenz aus beiden ergibt den Phasenversatz. Zur Rauschunterdrückung wird beispielsweise eine Mittelung über mehrere Symbole durchgeführt.

Ein Beispiel für eine solche Phasenschätzung gibt der Maximum Likelihood Schätzer (siehe [6]).

Dieser Schätzer erzielt brauchbare Ergebnisse, falls der exakte Zeitpunkt der Übertragung bekannt ist. Dieser wird in der Regel jedoch in einer vorherigen Schätzung ermittelt, wobei durch Rauschen und andere Effekte Abweichungen auftreten können. Außerdem ist es aufgrund von Beschränkungen der Rechenleistung nicht immer möglich, eine hinreichend genaue Zeit-Schätzung durchzuführen.

Somit enthalten die Empfangssymbole einen Rest-Zeitversatz, der in die Phasenschätzung eingeht und diese verschlechtert. Es ergibt sich durch den Rest-Zeitversatz oder allgemein Zeitversatz ein Phasenfehler, der zu der eigentlich interessierenden Phase zwischen der Sendefrequenz des Senders und der Empfangsfrequenz des Empfängers hinzukommt und daher die Auswertung beeinträchtigt.

Im Folgenden werden Ausgestaltungen beschrieben, die eine Verbesserung der Phasenschätzung ergeben. Die Ausgestaltungen gelten auch für eine verbesserte Frequenzschätzung, für den Fall, dass die Frequenzschätzung auf Phasendifferenzen benachbarter Symbole basiert.

Bei der Symbolrückgewinnung (z. B. durch Matched Filterung und folgender Unterabtastung) wird durch einen Zeitversatz auch ein Teil zumindest eines benachbarten Symbols in das Ergebnis eingebracht. Dieses Phänomen wird im Folgenden anhand einer MSK-Modulation beschrieben. Das Mapping dient dabei beispielsweise der Pilotsequenz-Bits auf die eigentlichen Symbole der Pilotsequenzen.

Zur Vereinfachung der Darstellung enthalten die folgenden Grafiken jeweils nur drei Symbole. Hierbei stellt das mittlere Symbol das zu untersuchende Symbol dar und die beiden anderen das zeitlich vorherige bzw. nachfolgende Symbol.

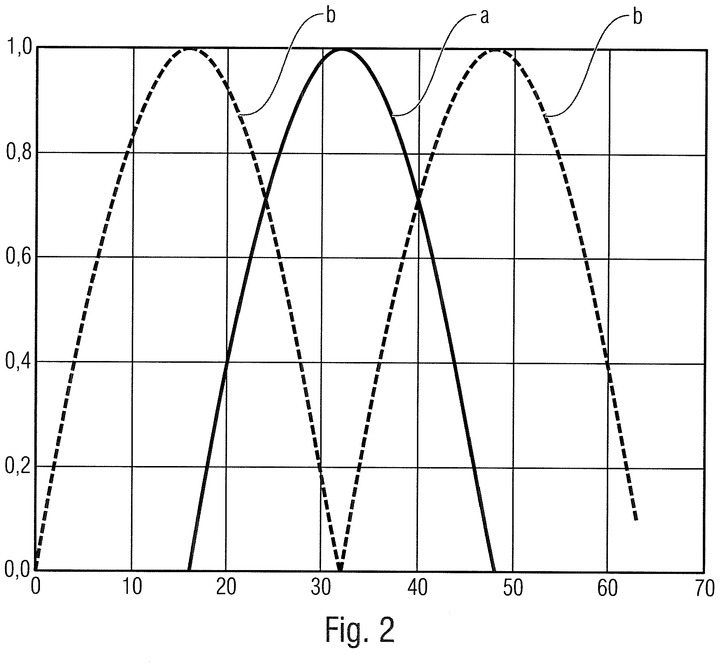

Fig. 2 zeigt ein MSK-Basisbandsignal mit drei Symbolen. Hierbei sind sowohl das zu untersuchende Symbol, als auch das vorherige und folgende Symbol mit positiver Amplitude gemappt worden. Es handelt sich somit um ein mittleres Symbol und zwei flankierende Symbole. Die Kurve a zeigt dabei den Realteil und die Kurven b zeigen den Imaginärteil des Signals. Aufgetragen ist dabei auf der y-Achse die Amplitude gegenüber der Zeit in Abtastzeitpunkten auf der x-Achse.

Im Folgenden wird der Einfluss der Phase für das mittlere Symbol untersucht, welches auf dem Realteil übertragen wird. Die beiden anderen flankierenden Symbole (das vorherige und das folgende Symbol) werden laut MSK-Vorschrift als einem Beispiel für das Mapping bei der Erzeugung der auszusendenden Symbole auf dem Imaginärteil übertragen.

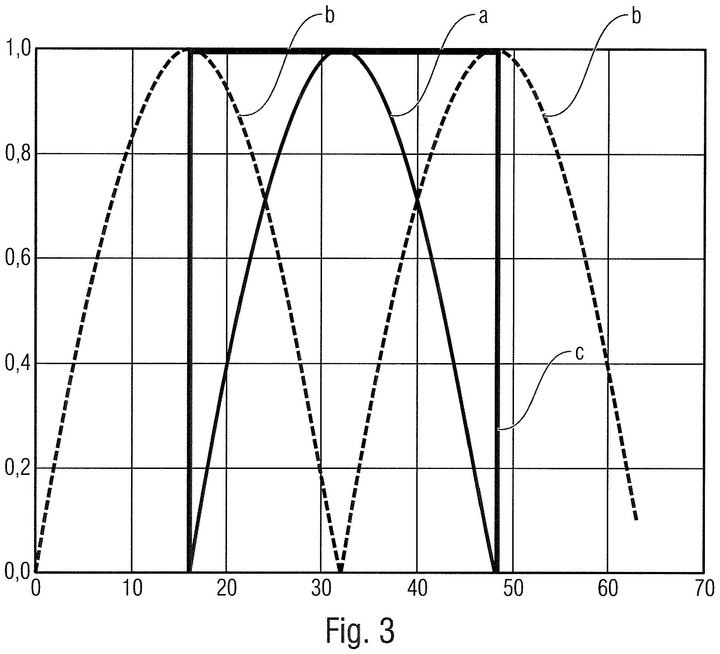

Die Symbolrückgewinnung erfolgt im Empfänger mit Hilfe eines Matched Filters, welcher mit dem Signal multipliziert und anschließend über das gesamte Symbol summiert wird. Die Fig. 3 zeigt die Länge des Matched Filters (stärkere Kurve c). Der Filter erstreckt sich über das gesamte mittlere Symbol. In Fig. 3 wird somit der Idealfall dargestellt, bei dem kein Zeitversatz auftritt.

Durch die spezielle MSK-Modulation wird bei der Matched Filterung zur Rekonstruktion der Symbole ein sog. ISI (Intersymbol Interference, sog. Symbolübersprechen, siehe [7]) eingefügt. Das Symbolübersprechen ist bekannt und kann bei der Berechnung der Phasendifferenzen berücksichtigt werden.

Für die Symbolrückgewinnung werden entsprechend die Daten innerhalb des gezeigten Bereichs ausgeschnitten und mit dem Matched Filter (Optimal-Filter) oder einer Näherung multipliziert. Das Symbol ergibt sich durch Integration (im zeitkontinuierlichen Fall) oder Summation (im zeitdiskreten Fall).

Wird das rekonstruierte Symbol aus Fig. 3 mit dem Sendesymbol (bzw. einem dem Empfänger vorliegenden Referenzsymbol) verglichen, so zeigt sich, dass kein Phasenversatz zwischen den beiden Symbolen vorhanden ist.

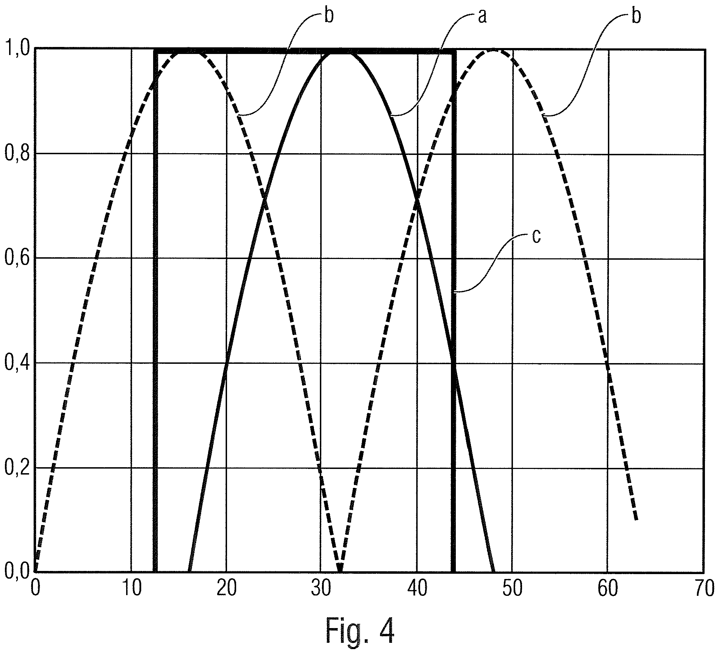

Tritt jedoch ein Zeitversatz auf, so wird das Fenster für den Matched Filter verschoben. Die Fig. 4 zeigt dies für einen negativen Zeitversatz, bei dem der korrekte Zeitpunkt nach dem angenommen Zeitpunkt liegt. Der Start des Symbols wird somit zu früh angenommen. Für die Phasenbestimmung ergibt sich somit aus dem Zeitversatz ein Phasenfehler als zusätzlicher Fehler bei der eigentlichen Bestimmung der Phase.

Durch den Zeitversatz fließt mehr Energie des vorangehenden flankierenden Symbols und weniger des eigentlich interessierenden mittleren Symbols in die Rekonstruktion des mittleren Symbols ein. Der Wert weicht somit vom erwarteten Sollwert ab. Weicht der Empfangswert jedoch vom erwarteten ab, so entsteht durch diese Abweichung ein Fehler in der Phasenschätzung.

Ähnlich gilt dies für einen positiven Zeitversatz, bei dem das eigentliche Symbol vor der angenommen Zeit beginnt. Damit erhöht sich der Einfluss allerdings des auf das mittlere Symbol folgenden flankierenden Symbols.

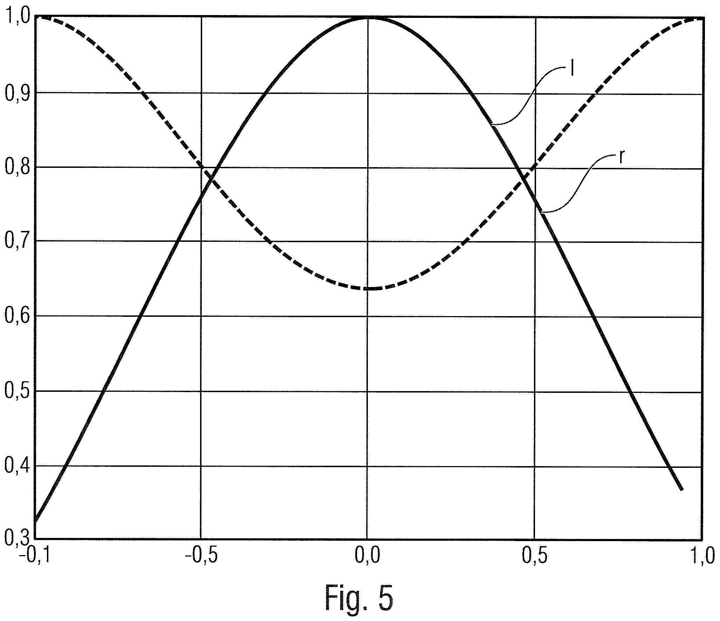

Einen Verlauf der Ergebnisse der Symbolrekonstruktion bei verschiedenen Zeitversätzen zeigt Fig. 5. Die Mitte stellt dabei den idealen Zeitpunkt dar. Aufgetragen ist die Amplitude auf der y-Achse gegenüber dem Zeitversatz (oder alternativ bezeichnet: dem Timing Fehler) in Symbollängen. Aufgetragen sind der Realteil R und der Imaginärteil I.

Fig. 5 zeigt, dass zum idealen Zeitpunkt der Einfluss der Nachbarsymbole (also der flankierenden Symbole im Beispiel der Fig. 2) am geringsten ist. Mit zunehmendem Zeitversatz nimmt der Einfluss der Nachbarsymbole zu, d. h. in diesem Beispiel mit MSK-Modulation steigt die Amplitude des Imaginärteils.

Wird das Empfangssymbol (also hier das mittlere Symbol) nach der Matched Filterung mit dem konjugiert komplexen des Sendesymbols (also des Referenzsymbols bzw. des zugehörigen Symbols der Referenzsequenz) multipliziert, so erhält man den Phasenoffset zwischen Referenzsymbol und dem betrachteten mittleren Symbol der Kombination aus drei Symbolen der Pilotsequenz des empfangenen Signals.

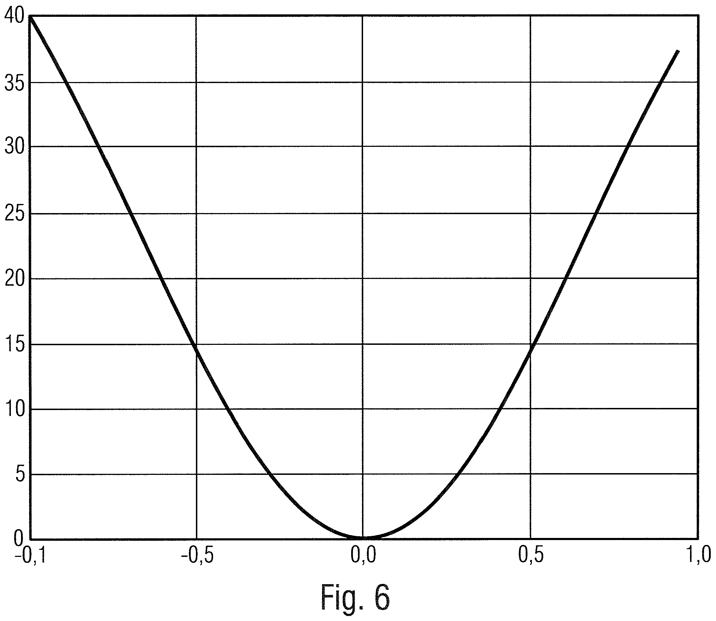

Den Phasenoffset zeigt Fig. 6 für das zur Fig. 5 zugehörige Symbol über dem Zeitversatz. In dieser Symbolkonstellation ist der Phasenoffset - also der sich ergebenden Phasenfehler durch den Zeitversatz - immer positiv. Die Höhe ist jedoch abhängig von der Höhe des Zeitversatzes.

Die vorherigen Ausführungen zeigen, dass das Ergebnis der Matched Filterung und somit auch der Phasenfehler bei Zeitversätzen von den vorherigen und folgenden - also den im Beispiel das jeweils betrachtete mittlere Symbole flankierenden - Symbolen abhängig ist.

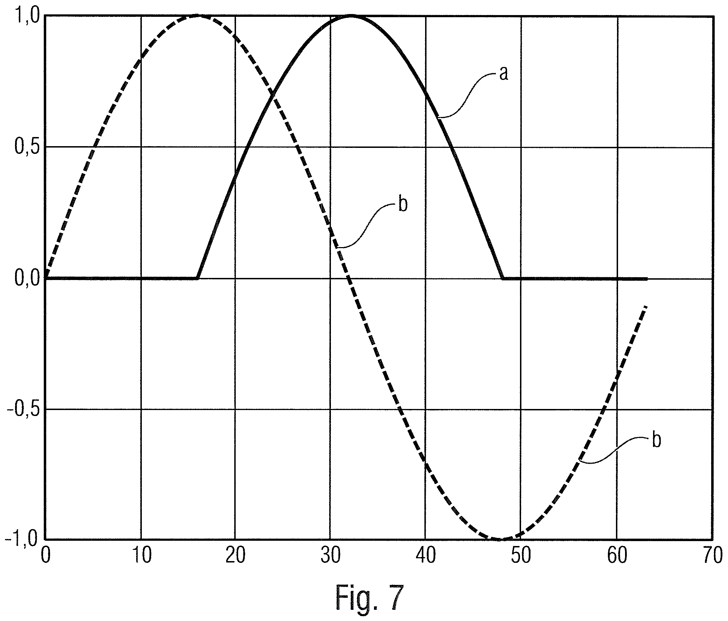

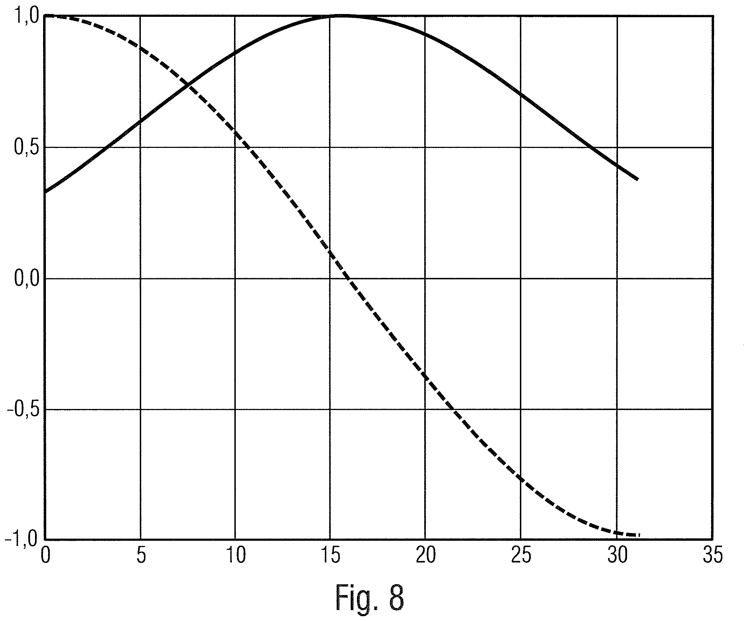

Um dies vollständig zu eruieren, wurde das Ergebnis der Matched Filterung unter Zeitversatz für eine andere Symbolkonstellation erneut berechnet. Das zu betrachtende Symbol ist ebenfalls wieder mit positiver Amplitude gemappt worden, allerdings besitzen die zwei flankierenden Symbole eine unterschiedliche Amplitude. Das komplexe Basisbandsignal und das Ergebnis der Matched Filterung mit verschiedenen Zeitversätzen sind in der Fig. 7 und der Fig. 8 gezeigt.

Die Fig. 7 zeigt die Amplitude der drei Symbole b, a, b gegenüber der Zeit in Abtastraten. Die beiden flankierenden Symbole b umfassen das mittlere Symbol a. Bei diesem MSKsignal in der gewählten Konstellation tritt am idealen Abtastzeitpunkt kein Symbolübersprechen (ISI) durch die flankierenden Symbole mit dem mittleren Symbol auf.

Die Fig. 8 zeigt die Amplitude des mittleren Symbole nach der Matched Filterung in Abhängigkeit vom Zeitversatz.

Wird das Empfangssymbol nach der Matched Filterung in gleicher Weise wie für die Fig. 6 mit dem konjugiert komplexen Wert des Sendesymbols multipliziert, so erhält man den Phasenoffset zwischen dem Referenzsymbol und dem betrachteten Empfangssymbol.

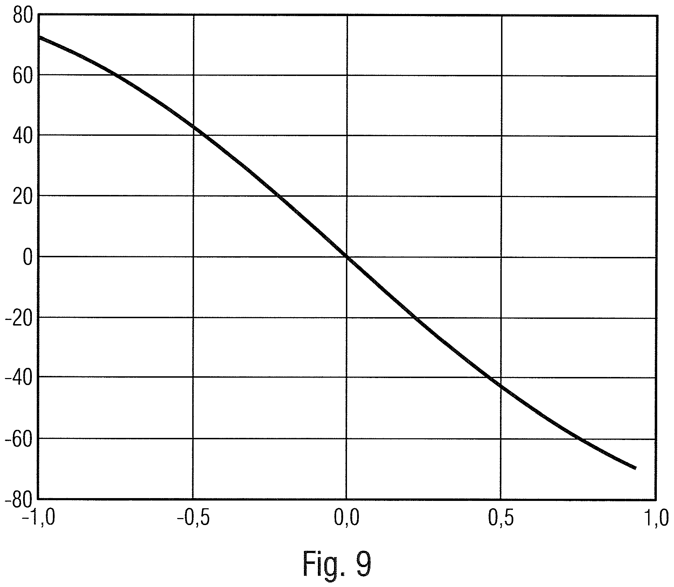

Den Phasenoffset zeigt Fig. 9 für das in Fig. 8 betrachtete mittlere Symbol über dem Zeitversatz. Im Vergleich zu Fig. 6 ist der Verlauf des Phasenoffsets nicht mehr nur positiv zu allen möglichen Zeitversätzen. Für negative Zeitoffsets ist der Phasenoffset positiv und für positive Zeitversätze ändert er sein Vorzeichen und wird negativ.

Insgesamt ist der Phasenoffset abhängig von den Symbolen, die das jeweils ausgewertete Symbol flankieren.

Daher sind die Symbole so gewählt, dass die sich jeweils infolge eines Zeitversatzes ergebenden Phasenfehler bei der Auswertung der einzelnen Symbole sich insgesamt bei der Mittelung über die betroffenen Symbole - sei dies aus einem Signal oder über mehrere Signale - gegenseitig kompensieren.

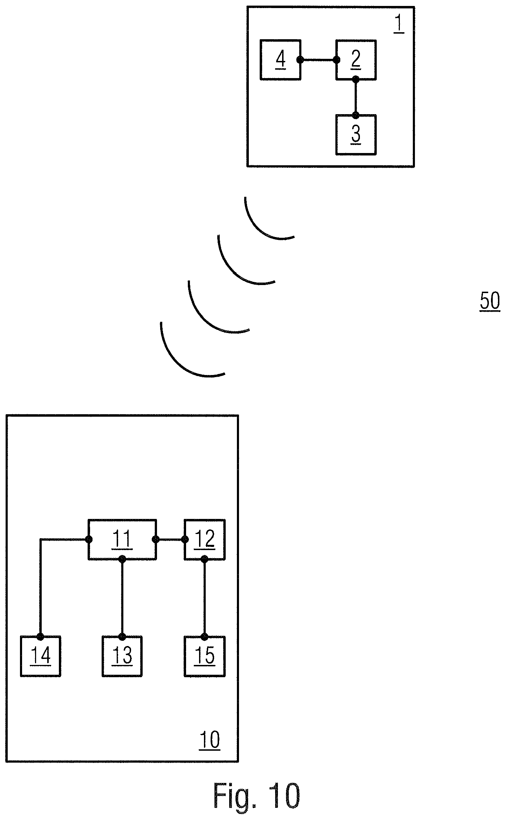

Die Fig. 10 zeigt ein System 50 mit einem Sender 1 und einem Empfänger 10.

Der Sender 1 verfügt über einen Signalgenerator 2 und eine Signalausgabevorrichtung 3. Der Signalgenerator 2 erzeugt ausgehend von Daten, die der Sender 1 zu übertragen hat, die auszusenden Signale. Die Daten sind beispielsweise Sensordaten oder Zustandsdaten des Senders 1 selbst.

Im gezeigten Ausführungsbeispiel wird das Telegramm-Splitting angewendet, sodass die auszugebenden Daten auf mindestens zwei Signale verteilt werden, die sich auch als Telegramm-Fragmente bezeichnen lassen. Die einzelnen Telegramm-Fragmente verfügen jeweils über eine Pilotsequenz, die von dem Signalgenerator 2 bereitgestellt wird. Die Bereitstellung für die einzelnen auszusenden Signale besteht dabei in einer Ausgestaltung darin, dass der Signalgenerator 2 auf einen Datenspeicher 4 zugreift, in welchem die Daten für die passende Pilotsequenz hinterlegt sind. Die Signalausgabevorrichtung 3 sendet die einzelnen Telegramm-Fragmente aus.

Die einzelnen Telegramm-Fragmente werden von dem Empfänger 10 empfangen und verarbeitet. Für die Verarbeitung ist eine Synchronisation zwischen Sender 1 und Empfänger 10 erforderlich, wofür die Synchronisationsvorrichtung 11 vorhanden ist. Der Synchronisation dienen dabei jeweils die Pilotsequenzen mit ihren Pilotsymbolen.

Eine Synchronisation ist bezüglich der Zeit erforderlich. Dies bezieht sich auf die Schätzung der zeitlichen Lage des empfangenen Signals und auf den damit verbundenen optimalen Zeitpunkt für die Abtastung des Signals. Für diese Synchronisation ist die Synchronisationsvorrichtung 11 mit einer Abtastvorrichtung 13 verbunden. Die Zeitpunkte der Abtastung können in der Regel nicht beeinflusst werden. Vielmehr ist der Zeitpunkt notwendig, um aus dem in der Regel überabgetasteten Signal die Symbole rekonstruieren oder andernfalls eine Interpolation durchführen zu können.

Eine weitere Synchronisation bezieht sich im gezeigten Beispiel auf die Frequenz. Relevant sind dabei die Trägerfrequenz, mit der die Signale von dem Sender 1 ausgesendet werden, und die Mittenfrequenz der Filtervorrichtung 14, mit der die empfangenen Signale gefiltert werden. Alternativ werden die Signale nach dem Empfang vor dem Filter frequenzmäßig verschoben. Die Differenz zwischen den beiden Frequenzen wird dabei als Frequenzablage bezeichnet. Für die Frequenzsynchronisation ist hier die Filtervorrichtung 14 mit der Synchronisationsvorrichtung 11 verbunden.

An die Frequenzsynchronisation schließt sich - in dem Fall einer kohärenten Demodulation bzw. Dekodierung - noch eine Phasensynchronisation an. Für diese Synchronisation wird im Folgenden die Signalauswertevorrichtung 12 näher beschrieben, die entsprechende Daten für die Synchronisation an die Synchronisationsvorrichtung 11 übermittelt.

Für die Ermittlung der Phase ist vorgesehen, dass jedes Pilotsymbol der Pilotsequenz des empfangenen Signals mit dem zugehörigen Referenzsymbol einer Referenzsequenz verglichen wird. Die Referenzsequenz ist dabei gleich der Pilotsequenz, die vom Sender 1 für die Erzeugung des Signals verwendet bzw. in das Signal eingefügt worden ist. Ist für jedes Pilotsymbol ein Phasenwert ermittelt worden, so wird anschließend ein Gesamtwert z. B. durch eine Mittelung, über die einzelnen Phasenwerte erzeugt. Die Referenzsequenzen sind hier in einem Datenspeicher 15 hinterlegt.

Wie zuvor erläutert, wirkt sich jedoch ein Zeitfehler zwischen dem Fenster der Filtervorrichtung 14 und dem eigentlichen Beginn des Symbols nachteilig auf die Ermittlung der Phase aus.

Durch die Mittelung über die Auswertung mehrerer Symbole zur Rauschunterdrückung wird auch eine Mittelung über die Fehler hinsichtlich des Phasenwerts durchgeführt. Daher ist vorgesehen, dass der mittlere Phasenfehler für alle Pilotsymbole bei der Synchronisierung verwendet wird. Damit der mittlere Fehler bei der Mittelung über die einzelnen Phasenwerte sich idealerweise zu Null ergibt oder zumindest sehr klein wird, wird ausgehend von den obigen Untersuchungen die Abhängigkeit des Phasenfehlers eines Symbols von den vorherigen sowie nachfolgenden Symbolen beachtet. Die Symbole werden also derartig ausgewählt, dass sich die Phasenfehler durch Zeitversatz gerade gegenseitig kompensieren bei einer Mittelung über die einzelnen Werte der Phasen, die jeweils pro Symbol erzeugt werden.

Da mehrere Pilotsymbole nacheinander übertragen werden, lassen sich das vorherige und das folgende Symbol (also die Symbole, die bei dem Beispiel der Fig. 2 unmittelbar ein mittleres bzw. für die Auswertung betrachtetes Symbol flankieren) festlegen, bzw. sind diese dem Empfänger bekannt. Um den Phasenfehler durch die einzelnen Pilotsymbole insgesamt zu kompensieren, wird für jedes Symbol, auf dem ein Phasenfehler auftreten kann, ein zweites übertragen, welches den entgegengesetzten Fehler (bei gleichem Zeitversatz) aufweist. Dies gilt hier für die Symbole eines Signals, das eine Pilotsequenz trägt.

In einer alternativen Ausgestaltung mitteln sich die Phasenfehler über die Teil-Pilotsequenzen mehrerer Signale, die insbesondere Telegramm-Fragmente sind.

In einer Ausgestaltung ist daher vorgesehen, dass die Länge der Pilotsequenz ein Vielfaches der Länge von Zwei besitzt, damit eine gerade Anzahl an Additionen für die Mittelung entsteht.

Der Effekt sei an einem Beispiel erläutert.

Ist die Sequenz aus Fig. 2 ein Teil der Pilotsequenz, so wird bei einem Zeitversatz ein positiver Phasenoffset erzeugt, der sowohl für positive als auch für negative Zeitversätze gilt. Um diesen Offset zu korrigieren, muss ebenfalls ein Symbol übertragen werden, bei dem der Fehler in der gleichen Höhe einen negativen Phasenfehler ausweist.

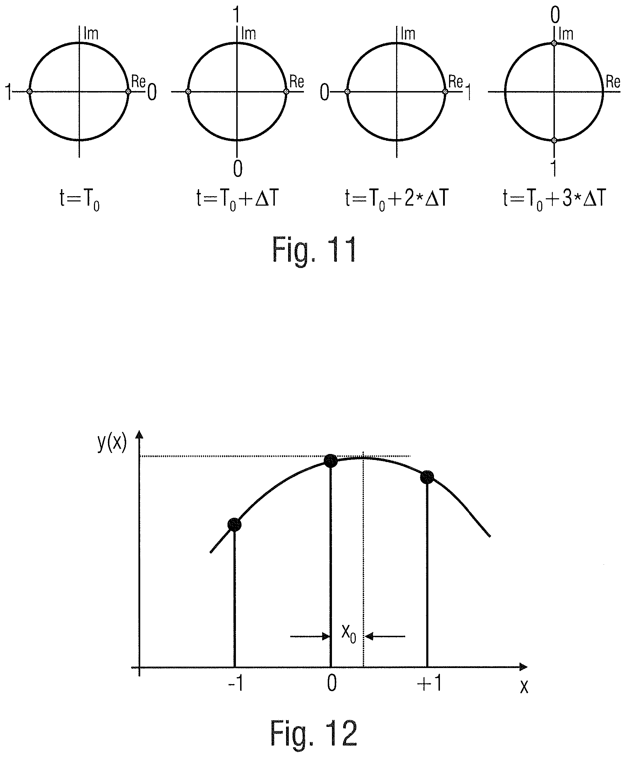

Die Fig. 11 zeigt die Abbildungsvorschrift der MSK-Modulation. Gezeigt sind dabei die möglichen Konstellationspunkte der MSK mit precoding (in MATLAB auch als non-diff MSK bekannt).

Die auszusendenden Symbole werden hierbei in Gruppen von vier Symbolen gegliedert, wobei das erste Symbol zum Zeitpunkt $T_0$ ausgesendet wird. Entsprechend wird im Zeitpunkt T0 für eine binäre Null der Konstellationspunkt +1 + 0j und für eine binäre Eins der Konstellationspunkt -1 + 0j gewählt. Für das folgende Symbol wird der Zeitpunkt $T_0 + \Delta T$ gewählt. Die Konstellationspunkte ergeben sich damit zu 0 + 1j (binäre Eins) und 0 - 1j (binäre Null). Für die beiden folgenden Zeitpunkte erfolgt die Berechnung der Konstellationspunkte in der gleichen Weise. Nachdem vier Symbole auf die Konstellationspunkte gemappt wurden, wird wieder beim Zeitpunkt $T_0$ begonnen.

Für eine Pilotsequenz-Länge von acht Symbolen und der zuvor beschriebenen MSK-Abbildungsvorschrift ergeben sich folgende Sequenzen, die sowohl eine gute Autokorrelation als auch einen Phasenfehler von nahe Null infolge eines Zeitversatzes aufweisen.

| Fortlaufende Nummer | Abfolge der Symbole | Anmerkung |
|---|---|---|
| 0 | [0, 1, 0, 0, 0, 0, 1, 0] | |
| 1 | [1, 0, 1, 1, 1, 1, 0, 1] | Invertierte bzw. gespiegelte Sequenz 0. |
| 2 | [0, 0, 0, 1, 0, 1, 1, 1] | |
| 3 | [1, 1, 1, 0, 1, 0, 0, 0] | Invertierte bzw. gespiegelte Sequenz 2. |

Daher ist die Pilotsequenz, mit der der Sender 1 die Signale aussendet, derartig definiert, dass die Summe der Phasenoffsets bei einer Zeitverschiebung minimiert wird.

Für eine Pilotsequenz-Länge von zwölf Symbolen und der zuvor beschriebenen MSK-Abbildungsvorschrift wurden folgende Sequenzen gefunden, die sowohl eine gute Autokorrelation als auch einen Phasenfehler von nahe Null unter Zeitoffset aufweisen.

| Fortlaufende Nummer | Abfolge der Symbole in Bits | $|\varepsilon_v|\ max$ |
|---|---|---|
| 0 | [0, 0, 0, 0, 0, 1, 1, 0, 1, 0, 1, 1] | 0.0132892511307 |
| 1 | [0, 0, 0, 1, 0, 0, 0, 0, 1, 0, 1, 1] | 0.00604862976372 |
| 2 | [0, 0, 0, 1, 0, 1, 0, 0, 1, 1, 1, 1] | 0.00669831471134 |
| 3 | [0, 0, 0, 1, 0, 1, 1, 1, 1, 0, 1, 1] | 0.00214046117234 |
| 4 | [0, 0, 0, 1, 1, 0, 1, 0, 1, 1, 1, 1] | 0.00228803319793 |
| 5 | [0, 1, 0, 0, 0, 0, 1, 0, 1, 1, 1, 0] | 0.00214191618191 |
| 6 | [0, 1, 0, 0, 1, 1, 1, 1, 1, 0, 1, 0] | 0.00228803319793 |
| 7 | [0, 1, 0, 1, 0, 0, 1, 1, 1, 1, 1, 0] | 0.0132920410548 |
| 8 | [0, 1, 0, 1, 1, 1, 1, 1, 0, 0, 1, 0] | 0.00228488288132 |
| 9 | [0, 1, 1, 1, 0, 1, 0, 0, 0, 0, 1, 0] | 0.00214482669223 |
| 10 | [0, 1, 1, 1, 1, 0, 1, 0, 0, 0, 1, 0] | 0.00604466832967 |
| 11 | [1, 0, 0, 0, 0, 1, 0, 1, 1, 1, 0, 1] | 0.00604862889634 |
| 12 | [1, 0, 1, 0, 0, 0, 0, 0, 1, 1, 0, 1] | 0.00229275981363 |
| 13 | [1, 0, 1, 0, 0, 0, 1, 0, 0, 0, 0, 1] | 0.0089182616364 |
| 14 | [1, 0, 1, 0, 1, 1, 0, 0, 0, 0, 0, 1] | 0.0132892511307 |
| 15 | [1, 0, 1, 1, 0, 0, 0, 0, 0, 1, 0, 1] | 0.00229275939358 |
| 16 | [1, 0, 1, 1, 1, 0, 1, 0, 0, 0, 0, 1] | 0.0060426888597 |
| 17 | [1, 0, 1, 1, 1, 1, 1, 0, 0, 1, 0, 1] | 0.00670003795849 |
| 18 | [1, 1, 0, 1, 0, 0, 0, 0, 1, 0, 0, 0] | 0.00604466832967 |
| 19 | [1, 1, 0, 1, 1, 1, 1, 0, 1, 0, 0, 0] | 0.00214046162904 |
| 20 | [1, 1, 1, 0, 0, 1, 0, 1, 0, 0, 0, 0] | 0.00228645779938 |
| 21 | [1, 1, 1, 0, 1, 0, 0, 0, 0, 1, 0, 0] | 0.00214191618191 |

(fortgesetzt)

| Fortlaufende Nummer | Abfolge der Symbole in Bits | $|\varepsilon_v|$ max |
|---|---|---|
| 22 | [1, 1, 1, 0, 1, 0, 0, 0, 1, 0, 0, 0] | 0.00229295513208 |
| 23 | [1, 1, 1, 0, 1, 0, 1, 1, 0, 0, 0, 0] | 0.00669917633491 |
| 24 | [1, 1, 1, 0, 1, 1, 1, 1, 0, 1, 0, 0] | 0.0060426888597 |
| 25 | [1, 1, 1, 1, 1, 0, 0, 1, 0, 1, 0, 0] | 0.0132808813584 |
| 26 | [1, 1, 1, 1, 1, 0, 1, 0, 1, 1, 0, 0] | 0.00855923745514 |

Die Nullen und Einsen sind dabei jeweils die Pilotsequenz-Bits, die durch ein entsprechendes Mapping die Symbole der Pilotsequenz bzw. der Teil-Pilotsequenz ergeben.

Dabei ist der Wert $|\varepsilon_v|_{max}$ die maximale systematische Frequenzschätzablage unter Verwendung einer Korrelation, wobei ein Abtastzeitfehler von -0.25T bis +0.25T und eine Frequenzablage von vT des Empfangssignals zwischen -0.05 bis +0.05 berücksichtigt wurde.

Die Fig. 12 zeigt ein Polynom zweiten Grades der Form $y(x) = y_0 - c(x-x_0)^2$ v, wie es bei Ausgestaltungen zur Verbesserung der Zeit- und/oder Frequenzschätzung mittels Interpolation beschrieben worden ist.

Im Folgenden werden weitere Ausführungsbeispiele der vorliegenden Erfindung beschrieben, die in Kombination mit den oben beschriebenen Ausführungsbeispielen oder für sich allein genommen Anwendung finden können.

Gemäß einem ersten Aspekt ist ein Sender 1 derartig ausgestaltet, mindestens ein Signal mit einer mehrere Pilotsymbole aufweisenden Pilotsequenz auszusenden, wobei der Sender 1 einen Signalgenerator 2 aufweist, wobei der Signalgenerator 2 die Pilotsequenz bereitstellt, wobei der Signalgenerator 2 die Pilotsequenz derartig bereitstellt, dass die Pilotsequenz mindestens zwei Symbol-Gruppen mit jeweils mindestens zwei Pilotsymbolen aufweist, und wobei die Symbol-Gruppen bei einer Auswertung eines in Folge der Aussendung des Signals von einem Empfänger 10 empfangenen Signals im Hinblick auf eine Phase von einem Zeitversatz zwischen einem Referenz-Zeitpunkt der Aussendung des Signals durch den Sender 1 und einem für die Auswertung für den Referenz-Zeitpunkt angenommenen und/oder geschätzten Wert abhängige Phasenfehler erzeugen, die sich bei der Auswertung gemeinsam über die Symbol-Gruppen hinweg im Wesentlichen gegenseitig kompensieren.

Gemäß einem zweiten Aspekt unter Bezugnahme auf den ersten Aspekt überlappen die Symbol-Gruppen teilweise.

Gemäß einem dritten Aspekt unter Bezugnahme auf zumindest einen des ersten bis zweiten Aspekts besteht mindestens eine Symbol-Gruppe aus einem mittleren Symbol und zwei flankierenden Symbolen.

Gemäß einem vierten Aspekt unter Bezugnahme auf zumindest einen des ersten bis dritten Aspekts ist der Sender 1 derartig ausgestaltet, Signale mit jeweils einer mindestens vier Pilotsymbole aufweisenden Pilotsequenz auszusenden.

Gemäß einem fünften Aspekt unter Bezugnahme auf zumindest einen des ersten bis vierten Aspekts sendet der Sender 1 Signale aus, die Pilotsequenzen aufweisen, die sich durch eine MSK-Modulation oder eine GMSK-Modulation ergeben.

Gemäß einem sechsten Aspekt unter Bezugnahme auf zumindest einen des ersten bis fünften Aspekts gibt der Sender 1 auszugebende Daten durch mindestens zwei Telegramm-Fragmente, die der Sender 1 als einzelne Signale aussendet und die kürzer sind als ein einzelnes die Daten insgesamt aufweisendes Telegramm, aus, und mindestens ein Telegramm-Fragment weist die von dem Signalgenerator 2 erzeugte Pilotsequenz auf.

Gemäß einem siebten Aspekt unter Bezugnahme auf zumindest einen des ersten bis sechsten Aspekts stellt der Signalgenerator 2 die Pilotsequenz mit einer Länge von mindestens acht Pilotsymbolen derartig bereit, sodass die Pilotsequenz eine der folgenden Formen aufweist:

[0, 1, 0, 0, 0, 0, 1, 0],
[1, 0, 1, 1, 1, 1, 0, 1],
[0, 0, 0, 1, 0, 1, 1, 1] oder
[1, 1, 1, 0, 1, 0, 0, 0],
wobei die Nullen und Einsen jeweils Pilotsequenz-Bits vor einer Modulation sind.

Gemäß einem achten Aspekt unter Bezugnahme auf zumindest einen des ersten bis sechsten Aspekts stellt der Signalgenerator 2 die Pilotsequenz mit einer Länge von mindestens acht Pilotsymbolen derartig bereit, sodass ein Abschnitt der Pilotsequenz, der einfach oder mehrfach Teil der Pilotsequenz ist, eine der folgenden Formen aufweist:

[0, 1, 0, 0, 0, 0, 1, 0],

[1, 0, 1, 1, 1, 1, 0, 1],
[0, 0, 0, 1, 0, 1, 1, 1] oder
[1, 1, 1, 0, 1, 0, 0, 0],
wobei die Nullen und Einsen jeweils Pilotsequenz-Bits vor einer Modulation sind.

Gemäß einem neunten Aspekt unter Bezugnahme auf zumindest einen des ersten bis sechsten Aspekts stellt der Signalgenerator 2 die Pilotsequenz mit einer Länge von mindestens zwölf Pilotsymbolen derartig bereit, sodass die Pilotsequenz eine der folgenden Formen aufweist:

[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],
[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1,0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],
wobei die Nullen und Einsen jeweils Pilotsequenz-Bits vor einer Modulation sind.

Gemäß einem zehnten Aspekt unter Bezugnahme auf zumindest einen des ersten bis sechsten Aspekts stellt der Signalgenerator 2 die Pilotsequenz mit einer Länge von mindestens zwölf Pilotsymbolen derartig bereit, sodass ein Abschnitt der Pilotsequenz, der einfach oder mehrfach Teil der Pilotsequenz ist, eine der folgenden Formen aufweist:

[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],
[1, 0, 1, 1, 0, 0, 0, 0, 0, 1, 0, 1],

[1, 0, 1, 1, 1, 0, 1, 0, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1,0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],
wobei die Nullen und Einsen jeweils Pilotsequenz-Bits vor einer Modulation sind.

Gemäß einem elften Aspekt ist ein Sender 1 derartig ausgestaltet, mindestens zwei Signale mit jeweils einer mehrere Pilotsymbole aufweisenden Teil-Pilotsequenz auszusenden, wobei der Sender 1 einen Signalgenerator 2 aufweist, wobei der Signalgenerator 2 die Teil-Pilotsequenz bereitstellt, wobei der Signalgenerator 2 die Teil-Pilotsequenzen der Signale derartig bereitstellt, dass die Teil-Pilotsequenzen jeweils mindestens eine Symbol-Gruppe mit mindestens zwei Pilotsymbolen aufweisen, und wobei die Symbol-Gruppen der Signale bei einer Auswertung von in Folge der Aussendung der Signale von einem Empfänger 10 empfangenen Signale im Hinblick auf eine Phase von einem Zeitversatz zwischen einem Referenz-Zeitpunkt der jeweiligen Aussendung eines Signals und einem für die Auswertung für den Referenz-Zeitpunkt angenommenen und/oder geschätzten Wert abhängige Phasenfehler erzeugen, die sich bei der Auswertung gemeinsam über die Signale im Wesentlichen gegenseitig kompensieren.

Gemäß einem zwölften Aspekt unter Bezugnahme auf den elften Aspekt weist mindestens eine Teil-Pilotsequenz mindestens zwei Symbol-Gruppen auf und die Symbol-Gruppen überlappen teilweise.

Gemäß einem dreizehnten Aspekt unter Bezugnahme auf zumindest einen des elften bis zwölften Aspekts besteht mindestens eine Symbol-Gruppe aus einem mittleren Symbol und zwei flankierenden Symbolen.

Gemäß einem vierzehnten Aspekt unter Bezugnahme auf zumindest einen des elften bis dreizehnten Aspekts sendet der Sender 1 Signale aus, die Teil-Pilotsequenzen aufweisen, die sich durch eine MSK-Modulation oder eine GMSK-Modulation ergeben.

Gemäß einem fünfzehnten Aspekt unter Bezugnahme auf zumindest einen des elften bis vierzehnten Aspekts stellt der Signalgenerator 2 die Teil-Pilotsequenzen derartig bereit, sodass die Teil-Pilotsequenzen zusammengenommen einen Abschnitt aufweisen, der einfach oder mehrfach vorhanden ist und der folgenden Formen aufweist:

[0, 1, 0, 0, 0, 0, 1, 0],
[1, 0, 1, 1, 1, 1, 0, 1],
[0, 0, 0, 1, 0, 1, 1, 1] oder
[1, 1, 1, 0, 1, 0, 0, 0],
wobei die Nullen und Einsen jeweils Pilotsequenz-Bits vor einer Modulation sind.

Gemäß einem sechzehnten Aspekt unter Bezugnahme auf zumindest einen des elften bis vierzehnten Aspekts stellt der Signalgenerator 2 die Teil-Pilotsequenzen derartig bereit, sodass die Teil-Pilotsequenzen zusammengenommen einen Abschnitt aufweisen, der einfach oder mehrfach vorhanden ist und der folgenden Formen aufweist:

[0, 0, 0, 0, 0, 1, 1, 0, 1, 0, 1, 1],
[0, 0, 0, 1, 0, 0, 0, 0, 1, 0, 1, 1],
[0, 0, 0, 1, 0, 1, 0, 0, 1, 1, 1, 1],
[0, 0, 0, 1, 0, 1, 1, 1, 1, 0, 1, 1],
[0, 0, 0, 1, 1, 0, 1, 0, 1, 1, 1, 1],
[0, 1, 0, 0, 0, 0, 1, 0, 1, 1, 1, 0],
[0, 1, 0, 0, 1, 1, 1, 1, 1, 0, 1, 0],
[0, 1, 0, 1, 0, 0, 1, 1, 1, 1, 1, 0],
[0, 1, 0, 1, 1, 1, 1, 1, 0, 0, 1, 0],
[0, 1, 1, 1, 0, 1, 0, 0, 0, 0, 1, 0],
[0, 1, 1, 1, 1, 0, 1, 0, 0, 0, 1, 0],
[1, 0, 0, 0, 0, 1, 0, 1, 1, 1, 0, 1],
[1, 0, 1, 0, 0, 0, 0, 0, 1, 1, 0, 1],
[1, 0, 1, 0, 0, 0, 1, 0, 0, 0, 0, 1],
[1, 0, 1, 0, 1, 1, 0, 0, 0, 0, 0, 1],

[1, 0, 1, 1, 0, 0, 0, 0, 1, 0, 1],
[1, 0, 1, 1, 1, 0, 1, 0, 0, 0, 1],
[1, 0, 1, 1, 1, 1, 1, 0, 0, 1, 0, 1],
[1, 1, 0, 1, 0, 0, 0, 0, 1, 0, 0, 0],
[1, 1,0, 1, 1, 1, 1, 0, 1, 0, 0, 0],
[1, 1, 1, 0, 0, 1, 0, 1, 0, 0, 0, 0],
[1, 1, 1, 0, 1, 0, 0, 0, 0, 1, 0, 0],
[1, 1, 1, 0, 1, 0, 0, 0, 1, 0, 0, 0],
[1, 1, 1, 0, 1, 0, 1, 1, 0, 0, 0, 0],
[1, 1, 1, 0, 1, 1, 1, 0, 1, 0, 0],
[1, 1, 1, 1, 1, 0, 0, 1, 0, 1, 0, 0] oder
[1, 1, 1, 1, 1, 0, 1, 0, 1, 1, 0, 0],
wobei die Nullen und Einsen jeweils Pilotsequenz-Bits vor einer Modulation sind.

Ein siebzehnter Aspekt bezieht sich auf ein Verfahren zum Aussenden von Signalen, wobei die Signale mit jeweils einer mehrere Pilotsequenz-Symbole aufweisenden Pilotsequenz ausgesendet werden, wobei die Pilotsequenzen derartig bereitgestellt werden, dass die Pilotsequenzen jeweils mindestens zwei Symbol-Gruppen mit jeweils mindestens zwei Pilotsymbolen aufweisen, und wobei die Symbol-Gruppen bei einer Auswertung eines in Folge der Aussendung des Signals von einem Empfänger 10 empfangenen Signals im Hinblick auf eine Phase von einem Zeitversatz zwischen einem Referenz-Zeitpunkt einer Aussendung des Signals und einem für die Auswertung für den Referenz-Zeitpunkt angenommenen und/oder geschätzten Wert abhängige Phasenfehler erzeugen, die sich bei der Auswertung über die Symbol-Gruppen im Wesentlichen gegenseitig kompensieren.

Ein achtzehnter Aspekt bezieht sich auf ein Verfahren zum Aussenden von Signalen, wobei mindestens zwei Signale mit jeweils einer mehrere Pilotsequenz-Symbole aufweisenden Teil-Pilotsequenz ausgesendet werden, wobei die Teil-Pilotsequenzen derartig bereitgestellt werden, dass die Teil-Pilotsequenz jeweils mindestens eine Symbol-Gruppe mit jeweils mindestens zwei Pilotsymbolen aufweisen, und wobei die Symbol-Gruppen der Signale bei einer Auswertung von in Folge der Aussendung der Signale von einem Empfänger 10 empfangenen Signalen im Hinblick auf eine Phase von einem Zeitversatz zwischen einem Referenz-Zeitpunkt der jeweiligen Aussendung eines Signals und einem für die Auswertung für den Referenz-Zeitpunkt angenommenen und/oder geschätzten Wert abhängige Phasenfehler erzeugen, die sich bei der Auswertung gemeinsam über die Signale im Wesentlichen gegenseitig kompensieren.

Ein neunzehnter Aspekt bezieht sich auf ein Computerprogramm mit einem Programmcode zur Durchführung des Verfahrens nach dem siebzehnten oder achtzehnten Aspekt.

Ein zwanzigster Aspekt bezieht sich auf einen Empfänger 10, wobei der Empfänger 10 derartig ausgestaltet ist, mindestens ein von einem Sender 1 ausgesendetes Signal zu empfangen, wobei der Empfänger 10 eine Synchronisationsvorrichtung 11 aufweist, wobei die Synchronisationsvorrichtung 11 derartig ausgestaltet ist, ausgehend von dem empfangenen Signal eine Synchronisation des Empfängers 10 mit dem Sender 1 vorzunehmen, wobei der Empfänger 10 eine Signalauswertevorrichtung 12 aufweist, wobei die Signalauswertevorrichtung 12 aus dem empfangenen Signal Daten für die Synchronisation ermittelt und an die Synchronisationsvorrichtung 11 für die Synchronisation übergibt, wobei die Signalauswertevorrichtung 12 bei der Auswertung einer Pilotsequenz oder einer Teil-Pilotsequenz eines empfangenen Signals einen Zeitversatz zwischen einem Referenz-Zeitpunkt einer Aussendung des Signals durch den Sender 1 und einem für die Auswertung für den Referenz-Zeitpunkt angenommenen und/oder geschätzten Wert ermittelt, und wobei die Signalauswertevorrichtung 12 für die weitere Auswertung der Pilotsequenz auf Symbole einer an den Zeitversatz angepassten Referenzsequenz zugreift, oder wobei die Signalauswertevorrichtung 12 für die weitere Auswertung der Teil-Pilotsequenz auf Symbole eines Teils einer an den Zeitversatz angepassten Referenzsequenz oder eines an den Zeitversatz angepassten Teils einer Referenzsequenz zugreift.

Gemäß einem einundzwanzigsten Aspekt unter Bezugnahme auf den zwanzigsten Aspekt nimmt die Signalauswertevorrichtung 12 die Anpassung der Referenzsequenz oder des Teils der Referenzsequenz vor, indem die Signalauswertevorrichtung 12 eine bekannte Referenzsequenz oder einen Teil einer bekannten Referenzsequenz zeitlich um den ermittelten Zeitversatz verschiebt.

Gemäß einem zweiundzwanzigsten Aspekt unter Bezugnahme auf den zwanzigsten Aspekt nimmt die Signalauswertevorrichtung 12 die Anpassung der Referenzsequenz oder des Teils der Referenzsequenz vor, indem die Signalauswertevorrichtung 12 auf einen Datenspeicher 15 mit entsprechend hinterlegen Referenzsequenzen oder Teilen von Referenzsequenzen zugreift.

Gemäß einem dreiundzwanzigsten Aspekt unter Bezugnahme auf zumindest einen des zwanzigsten bis zweiundzwanzigsten Aspekts weist der Empfänger 10 eine Filtervorrichtung 14 und eine Abtastvorrichtung 13 auf.

Ein vierundzwanzigster Aspekt bezieht sich auf ein Verfahren zum Synchronisieren von einem Empfänger 10 mit einem Sender 1, wobei mindestens ein von dem Sender 1 ausgesendetes Signal von dem Empfänger 10 empfangen wird, wobei ausgehend von einer Pilotsequenz oder einer Teil-Pilotsequenz des empfangenen Signals eine Synchronisation des Empfängers 10 mit dem Sender 1 vorgenommen wird, wobei ein Zeitversatz zwischen einem Referenz-Zeitpunkt einer Aussendung des Signals durch den Sender 1 und einem für den Referenz-Zeitpunkt angenommenen und/oder geschätzten Wert ermittelt wird, und wobei eine Pilotsequenz des empfangenen Signals mit Symbolen einer an den Zeitversatz angepassten Referenzsequenz ausgewertet wird, oder wobei eine Teil-Pilotsequenz des empfangenen Signals mit Symbolen eines Teils einer an den Zeitversatz angepassten Referenzsequenz oder mit Symbolen eines an den Zeitversatz angepassten Teils einer Referenzsequenz ausgewertet wird.

Ein fünfundzwanzigster Aspekt bezieht sich auf einen Empfänger 10, wobei der Empfänger 10 derartig ausgestaltet ist, mindestens ein von einem Sender 1 ausgesendetes Signal zu empfangen, wobei der Empfänger 10 eine Synchronisationsvorrichtung 11 aufweist, wobei die Synchronisationsvorrichtung 11 derartig ausgestaltet ist, ausgehend von dem empfangenen Signal eine Synchronisation des Empfängers 10 mit dem Sender 1 vorzunehmen, wobei der Empfänger 10 eine Signalauswertevorrichtung 12 aufweist, wobei die Signalauswertevorrichtung 12 aus dem empfangenen Signal Daten für die Synchronisation ermittelt und an die Synchronisationsvorrichtung 11 für die Synchronisation übergibt, wobei der Empfänger 10 derartig ausgestaltet ist, mehrere von dem Sender 1 ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender 1 gesendete Daten beinhaltet, wobei die Telegramm-Fragmente kürzer sind als ein einzelnes die gesendeten Daten aufweisendes Telegramm, wobei die Teil-Pilotsequenzen sich zu einer Pilotsequenz ergänzen, und wobei die Signalauswertevorrichtung 12 ausgehend von den Teil-Pilotsequenzen und unter Anwendung des DFT-Verfahrens einen Wert für eine Frequenzdifferenz zwischen einer Sendefrequenz des Senders 1 und einer Empfangsfrequenz des Empfängers 10 ermittelt, indem die Signalauswertevorrichtung 12 für jede Teil-Pilotsequenz Werte von Entscheidungsvariablen $d_i[k]$ ermittelt, die ermittelten Werte der Entscheidungsvariablen $d_i[k]$ über die Teil-Pilotsequenzen miteinander kombiniert und mit den kombinierten Werten eine Bestimmung eines Maximum-Werts durchführt.

Gemäß einem sechsundzwanzigsten Aspekt unter Bezugnahme auf den fünfzwanzigsten Aspekt ermittelt die Signalauswertevorrichtung 12 für jede Teil-Pilotsequenz die Werte der Entscheidungsvariablen $d_i[k]$, indem die Signalauswertevorrichtung 12 für eine Mehrzahl von als Frequenzhypothesen bezeichneten Frequenzen einer komplexen Exponentialschwingung Multiplikationswerte einer Multiplikation von Abtastwerten der jeweiligen Teil-Pilotsequenz mit konjugiert komplexen Werten einer gleichen Anzahl von Referenzsymbolen einer bekannten Referenzsequenz und mit Abtastwerten der komplexen Exponentialschwingung bildet und die Multiplikationswerte aufsummiert.

Gemäß einem siebenundzwanzigsten Aspekt unter Bezugnahme auf zumindest einen des fünfzwanzigsten bis sechsundzwanzigsten Aspekts kombiniert die Signalauswertevorrichtung 12 die für die Teil-Pilotsequenzen ermittelten Werte der Entscheidungsvariablen $d_i[k]$ zusammen für die Teil-Pilotsequenzen miteinander, indem die Signalauswertevorrichtung 12 die Beträge der Werte der Entscheidungsvariablen $d_i[k]$ addiert.

Gemäß einem achtundzwanzigsten Aspekt unter Bezugnahme auf zumindest einen des fünfzwanzigsten bis sechsundzwanzigsten Aspekts kombiniert die Signalauswertevorrichtung 12 die für die Teil-Pilotsequenzen ermittelten Werte der Entscheidungsvariablen $d_i[k]$ zusammen für die Teil-Pilotsequenzen miteinander, indem die Signalauswertevorrichtung 12 eine Summe der Beträge eines Realteils und eines Imaginärteils der Werte der Entscheidungsvariablen $d_i[k]$ bildet.

Gemäß einem neunundzwanzigsten Aspekt unter Bezugnahme auf zumindest einen des fünfzwanzigsten bis sechsundzwanzigsten Aspekts kombiniert die Signalauswertevorrichtung 12 die für die Teil-Pilotsequenzen ermittelten Werte der Entscheidungsvariablen $d_i[k]$ zusammen für die Teil-Pilotsequenzen miteinander, indem die Signalauswertevorrichtung 12 die Betragsquadrate der Werte der Entscheidungsvariablen $d_i[k]$ aufsummiert. Gemäß einem dreißigsten Aspekt unter Bezugnahme auf zumindest einen des fünfzwanzigsten bis sechsundzwanzigsten Aspekts kombiniert die Signalauswertevorrichtung 12 die für die Teil-Pilotsequenzen ermittelten Werte der Entscheidungsvariablen $d_i[k]$ zusammen für die Teil-Pilotsequenzen kohärent unter Beachtung von Betrag und Phase der Werte der Entscheidungsvariablen $d_i[k]$ miteinander.

Gemäß einem einunddreißigsten Aspekt unter Bezugnahme auf zumindest einen des fünfzwanzigsten bis dreißigsten Aspekts kombiniert die Signalauswertevorrichtung 12 die ermittelten Werte der Entscheidungsvariablen $d_i[k]$ unter Einbeziehung von Gewichtungsfaktoren miteinander kombiniert.

Gemäß einem zweiunddreißigsten Aspekt unter Bezugnahme auf zumindest einen des fünfzwanzigsten bis dreißigsten Aspekts kombiniert die Signalauswertevorrichtung 12 die ermittelten Werte der Entscheidungsvariablen $d_i[k]$ unter Einbeziehung von sich jeweils auf die Teil-Pilotsequenzen beziehende Gewichtungsfaktoren miteinander.

Gemäß einem dreiunddreißigsten Aspekt unter Bezugnahme auf zumindest einen des einunddreißigsten bis zweiunddreißigsten Aspekts ermittelt die Signalauswertevorrichtung 12 die Gewichtungsfaktoren ausgehend von einem Signal-zu-Rauschen-Verhältnis des jeweiligen Telegramm-Fragments.

Gemäß einem vierunddreißigsten Aspekt unter Bezugnahme auf den dreiunddreißigsten Aspekt ermittelt die Signalauswertevorrichtung 12 die Gewichtungsfaktoren als proportional zu einer Wurzel aus dem Signal-zu-Rauschen-Verhältnis.

Gemäß einem fünfunddreißigsten Aspekt unter Bezugnahme auf den dreiunddreißigsten Aspekt ermittelt die

EP 3 876 491 B1

Signalauswertevorrichtung 12 die Gewichtungsfaktoren als proportional zu einer Wurzel aus einem Quotienten aus dem Signal-zu-Rauschen-Verhältnis und einer Rauschleistung des jeweiligen Telegramm-Fragments.

Gemäß einem sechsunddreißigsten Aspekt unter Bezugnahme auf zumindest den dreiunddreißigsten Aspekt ermittelt die Signalauswertevorrichtung 12 die Gewichtungsfaktoren in Abhängigkeit von einer der Signalauswertevorrichtung zur Verfügung stehenden Rechenleistung oder in Abhängigkeit von einem Verhältnis des Signal-zu-Rauschen-Verhältnisses relativ zu einem vorgebbaren Relationswert oder in Abhängigkeit von einer Störleistung entweder als proportional zu einer Wurzel aus dem Signal-zu-Rauschen-Verhältnis oder als proportional zu einer Wurzel aus einem Quotienten aus dem Signal-zu-Rauschen-Verhältnis und einer Rauschleistung des jeweiligen Telegramm-Fragments.

Gemäß einem siebenunddreißigsten Aspekt unter Bezugnahme auf zumindest einen des zwanzigsten bis dreiundzwanzigsten Aspekts oder des fünfundzwanzigsten bis sechsunddreißigsten Aspekts ist der Empfänger 10 derartig ausgestaltet, mehrere von dem Sender 1 ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender 1 gesendete Daten beinhaltet, wobei die Telegramm-Fragmente kürzer sind als ein einzelnes die gesendeten Daten aufweisendes Telegramm, wobei die Teil-Pilotsequenzen sich zu einer Pilotsequenz ergänzen, und wobei die Signalauswertevorrichtung 12 ausgehend von den Teil-Pilotsequenzen und unter Anwendung des DFT-Verfahrens einen Wert für eine Frequenzdifferenz zwischen einer Sendefrequenz des Senders 1 und einer Empfangsfrequenz des Empfängers 10 ermittelt, indem die Signalauswertevorrichtung 12 für jede Teil-Pilotsequenz Werte von Entscheidungsvariablen $d_i[k]$ ermittelt, die ermittelten Werte der Entscheidungsvariablen $d_i[k]$ über die Teil-Pilotsequenzen miteinander kombiniert und mit den kombinierten Werten eine Bestimmung eines Maximum-Werts durchführt, wobei die Signalauswertevorrichtung 12 eine Zeitschätzung für einen Zeitversatz zwischen einem Referenz-Zeitpunkt einer Aussendung des Telegramm-Fragments und einem für die Auswertung des Telegramm-Fragments für den Referenz-Zeitpunkt angenommenen und/oder geschätzten Wert durchführt, indem die Signalauswertevorrichtung 12 ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Gemäß einem achtunddreißigsten Aspekt unter Bezugnahme auf zumindest einen des zwanzigsten bis dreiundzwanzigsten Aspekts oder des fünfundzwanzigsten bis sechsunddreißigsten Aspekts ist der Empfänger 10 derartig ausgestaltet, mindestens ein von dem Sender 1 ausgesendetes Telegramm zu empfangen, wobei das Telegramm eine Pilotsequenz aufweist, wobei die Signalauswertevorrichtung 12 ausgehend von der Pilotsequenz und unter Anwendung des DFT-Verfahrens einen Wert für eine Frequenzdifferenz zwischen einer Sendefrequenz des Senders 1 und einer Empfangsfrequenz des Empfängers 10 ermittelt, indem die Signalauswertevorrichtung 12 für die Pilotsequenz Werte von Entscheidungsvariablen $d_i[k]$ ermittelt, eine Bestimmung eines Maximum-Werts durchführt, wobei die Signalauswertevorrichtung 12 eine Zeitschätzung für einen Zeitversatz zwischen einem Referenz-Zeitpunkt einer Aussendung des Telegramms und einem für die Auswertung des Telegramms für den Referenz-Zeitpunkt angenommenen und/oder geschätzten Wert durchführt, indem die Signalauswertevorrichtung 12 ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

Gemäß einem neunzunddreißigsten Aspekt unter Bezugnahme auf zumindest einen des siebenunddreißigsten bis achtunddreißigsten Aspekts erhält die Signalauswertevorrichtung 12 ausgehend von dem durch die Bestimmung des Maximum-Werts und einem positiven Vergleich des Maximums-Werts mit einer Entscheidungsschwelle den Maximalwert.

Gemäß einem vierzigsten Aspekt unter Bezugnahme auf zumindest einen des siebenunddreißigsten bis neunzunddreißigsten Aspekts erzeugt die Signalauswertevorrichtung 12 den Zeit-Schätzwert aus dem Maximalwert und zwei benachbarten Werten, und wobei die zwei benachbarten Werte hinsichtlich der Zeitvariable dem ermittelten Maximalwert vorangehen bzw. folgen.

Gemäß einem einundvierzigsten Aspekt unter Bezugnahme auf den vierzigsten Aspekt ermittelt die Signalauswertevorrichtung 12 für den Maximalwert und die zwei benachbarten Werte ein Polynom, und die Signalauswertevorrichtung 12 ermittelt den Zeit-Schätzwert aus einem dem Polynom zugehörigen Extremwert.

Gemäß einem zweiundvierzigsten Aspekt unter Bezugnahme auf den einundvierzigsten Aspekt nimmt die Signalauswertevorrichtung 12 die Interpolation mit einem Polynom zweiten Grades vor.

Gemäß einem dreiundvierzigsten Aspekt unter Bezugnahme auf den zweiundvierzigsten Aspekt nimmt die Signalauswertevorrichtung 12 die Interpolation mit einem Polynom folgender Form vor: $y(x) = y_0 - c(x-x_0)^2$, und wobei die freien Parameter $y_0$, $c$ und $x_0$ anhand des Maximums und der Nachbarstellen ermittelt sind.

Gemäß einem vierundvierzigsten Aspekt unter Bezugnahme auf zumindest einen des zwanzigsten bis dreiundzwanzigsten Aspekts oder des fünfundzwanzigsten bis dreiundvierzigsten Aspekts ist der Empfänger 10 derartig ausgestaltet, mehrere von dem Sender 1 ausgesendete Telegramm-Fragmente zu empfangen, wobei die Telegramm-Fragmente jeweils eine Teil-Pilotsequenz aufweisen, wobei die Telegramm-Fragmente sich zu einem Telegramm ergänzen, das von dem Sender 1 gesendete Daten beinhaltet, wobei die Telegramm-Fragmente kürzer sind als ein einzelnes die gesendeten Daten aufweisendes Telegramm, wobei die Teil-Pilotsequenzen sich zu einer Pilotsequenz ergänzen, und wobei die Signalauswertevorrichtung 12 ausgehend von den Teil-Pilotsequenzen und unter Anwendung des DFT-Verfahrens einen Wert für eine Frequenzdifferenz zwischen einer Sendefrequenz des Senders 1 und einer Empfangsfrequenz des Empfängers 10 ermittelt, indem die Signalauswertevorrichtung 12 für jede Teil-Pilotsequenz Werte von Entscheidungsvariablen $d_i[k]$ ermittelt, die ermittelten Werte der Entscheidungsvariablen $d_i[k]$ über die Teil-Pilotsequenzen miteinander kombiniert und mit den kombinierten Werten eine Bestimmung eines Maximum-Werts durchführt, wobei die Signalauswertevorrichtung 12 eine Frequenzschätzung für die Frequenzdifferenz durchführt, indem die Signalauswertevorrichtung 12 ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt.

Gemäß einem fünfundvierzigsten Aspekt unter Bezugnahme auf zumindest einen des zwanzigsten bis dreiundzwanzigsten Aspekts oder des fünfundzwanzigsten bis dreiundvierzigsten Aspekts ist der Empfänger 10 derartig ausgestaltet, mindestens ein von dem Sender 1 ausgesendetes Telegramm zu empfangen, wobei das Telegramm eine Pilotsequenz aufweist, wobei die Signalauswertevorrichtung 12 ausgehend von der Pilotsequenz und unter Anwendung des DFT-Verfahrens einen Wert für eine Frequenzdifferenz zwischen einer Sendefrequenz des Senders 1 und einer Empfangsfrequenz des Empfängers 10 ermittelt, indem die Signalauswertevorrichtung 12 für die Pilotsequenz Werte von Entscheidungsvariablen $d_i[k]$ ermittelt, eine Bestimmung eines Maximum-Werts durchführt, wobei die Signalauswertevorrichtung 12 eine Frequenzschätzung für die Frequenzdifferenz durchführt, indem die Signalauswertevorrichtung 12 ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt.

Gemäß einem sechsundvierzigsten Aspekt unter Bezugnahme auf zumindest einen des vierundvierzigsten bis fünfundvierzigsten Aspekts erhält die Signalauswertevorrichtung 12 den Maximalwert ausgehend von dem Maximum-Wert und einem positiven Vergleich des Maximum-Werts mit einer Entscheidungsschwelle.

Gemäß einem siebenundvierzigsten Aspekt unter Bezugnahme auf zumindest einen des vierundvierzigsten bis sechsundvierzigsten Aspekts erzeugt die Signalauswertevorrichtung 12 den Frequenz-Schätzwert aus dem Maximalwert und zwei benachbarten Werten, wobei die zwei benachbarten Werte hinsichtlich der Frequenzvariable dem ermittelten Maximalwert vorangehen bzw. folgen.

Gemäß einem achtundvierzigsten Aspekt unter Bezugnahme auf den siebenundvierzigsten Aspekt ermittelt die Signalauswertevorrichtung 12 für den Maximalwert und die zwei benachbarten Werte ein Polynom, und die Signalauswertevorrichtung 12 ermittelt aus einem dem Polynom zugehörigen Extremwert den Frequenz-Schätzwert.

Gemäß einem neunundvierzigsten Aspekt unter Bezugnahme auf den achtundvierzigsten Aspekt nimmt die Signalauswertevorrichtung 12 die Interpolation mit einem Polynom zweiten Grades vor.

Gemäß einem fünfzigsten Aspekt unter Bezugnahme auf den neunundvierzigsten Aspekt nimmt die Signalauswertevorrichtung 12 die Interpolation mit einem Polynom folgender Form vor: $y(x) = y_0 - c(x-x_0)^2$, und wobei die freien Parameter $y_0$, c und $x_0$ anhand des Maximums und der Nachbarstellen ermittelt sind.

Gemäß einem einundfünfzigsten Aspekt unter Bezugnahme auf einen des siebenunddreißigsten bis fünfzigsten Aspekts ermittelt die Signalauswertevorrichtung 12 den Zeit-Schätzwert und verwendet denselben für eine erneute Ermittlung der Frequenzdifferenz, indem die Signalauswertevorrichtung 12 bei einer erneuten Ermittlung der Werte der Entscheidungsvariablen $d_i[k]$ um den Zeit-Schätzwert verschobene Abtastwerte der jeweiligen Teil-Pilotsequenzen verwendet oder Referenzsymbole einer Referenzsequenz um den Zeit-Schätzwert zeitlich verschiebt.

Gemäß einem zweiundfünfzigsten Aspekt unter Bezugnahme auf den einundfünfzigsten Aspekt nimmt die Signalauswertevorrichtung 12 für die erneute Ermittlung der Frequenzdifferenz eine Interpolation der Abtastwerte der jeweiligen Teil-Pilotsequenzen vor.

Gemäß einem dreiundfünfzigsten Aspekt unter Bezugnahme auf zumindest einen des einundfünfzigsten bis zweiundfünfzigsten Aspekts führt die Signalauswertevorrichtung 12 nach der erneuten Ermittlung der Frequenzdifferenz eine Frequenzschätzung für die Frequenzdifferenz durch, indem die Signalauswertevorrichtung 12 ausgehend von einem durch die Bestimmung des Maximum-Werts und einem positiven Vergleich mit der Entscheidungsschwelle erhaltenen Maximalwert und mindestens einem hinsichtlich einer Frequenzvariable benachbarten Wert einen Frequenz-Schätzwert ermittelt.

Ein vierundfünfzigster Aspekt bezieht sich auf ein Verfahren zum Synchronisieren von einem Empfänger 10 mit einem Sender 1, wobei mindestens ein von dem Sender 1 ausgesendetes Signal von dem Empfänger 10 empfangen wird, wobei ausgehend von einer Pilotsequenz oder einer Teil-Pilotsequenz des empfangenen Signals eine Synchronisation des Empfängers 10 mit dem Sender 1 vorgenommen wird, wobei durch den Empfänger 10 mehrere von dem Sender 1 ausgesendete Telegramm-Fragmente empfangen werden, wobei die Telegramm-Fragmente jeweils eine Teil-Pilotsequenz aufweisen, wobei die Telegramm-Fragmente sich zu einem Telegramm ergänzen, das von dem Sender 1 ausgesendete Daten beinhaltet, wobei die Telegramm-Fragmente kürzer als das Telegramm sind, wobei die Teil-Pilotsequenzen sich zu einer Pilotsequenz ergänzen, wobei ausgehend von den Teil-Pilotsequenzen der Empfänger 10 mit dem Sender 1 synchronisiert wird, wobei ausgehend von den Teil-Pilotsequenzen und unter Anwendung des DFT-Verfahrens ein Wert für eine Frequenzdifferenz zwischen einer Sendefrequenz des Senders 1 und einer Empfangsfrequenz des Empfängers 10 ermittelt wird, indem für jede Teil-Pilotsequenz Werte von Entscheidungsvariablen $d_i[k]$ ermittelt werden, indem die ermittelten Werte der Entscheidungsvariablen $d_i[k]$ über alle Teil-Pilotsequenzen miteinander kombiniert werden und indem mit den kombinierten Werten eine Bestimmung eines Maximum-Werts durchführt wird.

Ein fünfundfünfzigster Aspekt bezieht sich auf ein Computerprogramm mit einem Programmcode zur Durchführung des Verfahrens nach einem des vierundzwanzigsten oder vierundfünfzigsten Aspekts.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen.

Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen

[1] Z. Y. Choi and Y. H. Lee, "Frame synchronization in the presence of frequency offset," Communications, IEEE Transactions on, vol. 50, no. 7, pp. 1062-1065, 2002.

[2] Sust, M.K. ; Kaufmann, R. F. ; Molitor, F. ; Bjornstrom, G.A.: Rapid acquisition concept for voice activated CDMA communication. In: IEEE Global Telecommunications Conference, 1990 Bd. 3, 1990, S. 1820#1826

[3] Internationale Patentanmeldung "Optimized Preamble and Methods for Interference Robust Packet Detection for Telemetry Applications" (PCT/EP2016/057014)

[4] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[5] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.

[6] Wolfgang Koch, Skript zum Seminar Empfängersynchronisation am Fraunhofer IIS, 10.06.2015 - 15.06.2015

[7] Uwe Lambrette, Ralf Mehlan and Heinrich Meyr, Comparison of Demodulation Techniques for MSK, RWTH Aachen, https://www.ice.rwth-aachen.de/fileadmin/publications/Lambrette95TIRR.pdf, last retrieved: 19.09.2016

[8] Kay, Steven M.: Fundamentals of Statistical Signal Processing: Detection theory. Upper Saddle River, NJ : Prentice Hall PTR, 1998. ISBN 9780135041352

[9] Umberto Mengali, Aldo N. D'Andrea: "Synchronization Techniques for Digital Receivers" Plenum Press, 1997, ISBN 0-306-45725-3

[10] Walter Kellermann: "Digital Signal Processing", Vorlesungsskript vom WS 2016/17, Lehrstuhl für Multimediakommunikation und Signalverarbeitung (LMS) der Friedrich-Alexander-Universität Erlangen-Nürnberg.

[11] Steven M. Kay: "Fundamentals of Statistical Signal Processing - Vol. 2: Detection Theory", Prentice Hall, 1998, ISBN: 0-13-345711-7

[12] Z. Y. Choi and Y. H. Lee, "Frame synchronization in the presence of frequency offset", IEEE Transactions on Communications, vol. 50, no. 7, pp. 1062-1065, 2002.

**Patentansprüche**

1. Empfänger (10),

   wobei der Empfänger (10) derartig ausgestaltet ist, mindestens ein von einem Sender (1) ausgesendetes Signal zu empfangen,

wobei der Empfänger (10) eine Synchronisationsvorrichtung (11) aufweist,
wobei die Synchronisationsvorrichtung (11) derartig ausgestaltet ist, ausgehend von dem empfangenen Signal eine Synchronisation des Empfängers (10) mit dem Sender (1) vorzunehmen,
wobei der Empfänger (10) eine Signalauswertevorrichtung (12) aufweist,
wobei die Signalauswertevorrichtung (12) aus dem empfangenen Signal Daten für die Synchronisation ermittelt und an die Synchronisationsvorrichtung (11) für die Synchronisation übergibt,
wobei der Empfänger (10) derartig ausgestaltet ist, mehrere von dem Sender (1) ausgesendete Teilpakete zu empfangen, auf die ein Telegramm aufgeteilt ist, das von dem Sender (1) gesendete Daten beinhaltet,
wobei die Teilpakete mit unterschiedlichen Frequenzen und zu unterschiedlichen Zeiten ausgesendet sind,
wobei die Teilpakete jeweils eine Teil-Pilotsequenz aufweisen,
wobei die Teilpakete kürzer sind als ein einzelnes die gesendeten Daten aufweisendes Telegramm,
wobei die Teil-Pilotsequenzen sich zu einer Pilotsequenz ergänzen, und
wobei die Signalauswertevorrichtung (12) zu jedem Zeitpunkt k L Abtastwerte im Symbolabstand entnimmt und mit L konjugiert komplexen Symbolen der Teil-Pilotsequenzen multipliziert und ausgehend von dem Ergebnis der Multiplikation und unter Anwendung des DFT-Verfahrens einen Wert für eine Frequenzdifferenz zwischen einer Sendefrequenz des Senders (1) und einer Empfangsfrequenz des Empfängers (10) ermittelt, indem die Signalauswertevorrichtung (12) für jede Teil-Pilotsequenz Werte von Entscheidungsvariablen ($d_i[k]$) ermittelt, die ermittelten Werte der Entscheidungsvariablen ($d_i[k]$) über die Teil-Pilotsequenzen miteinander kombiniert und mit den kombinierten Werten eine Bestimmung eines Maximum-Werts durchführt.

2. Empfänger (10) nach Anspruch 1, wobei die Signalauswertevorrichtung (12) für jede Teil-Pilotsequenz die Werte der Entscheidungsvariablen ($d_i[k]$) ermittelt, indem die Signalauswertevorrichtung (12) für eine Mehrzahl von als Frequenzhypothesen bezeichneten Frequenzen einer komplexen Exponentialschwingung Multiplikationswerte einer Multiplikation von Abtastwerten der jeweiligen Teil-Pilotsequenz mit konjugiert komplexen Werten einer gleichen Anzahl von Referenzsymbolen einer bekannten Referenzsequenz und mit Abtastwerten der komplexen Exponentialschwingung bildet und die Multiplikationswerte aufsummiert.

3. Empfänger (10) nach Anspruch 1 oder 2, wobei die Signalauswertevorrichtung (12) die für die Teil-Pilotsequenzen ermittelten Werte der Entscheidungsvariablen ($d_i[k]$) zusammen für die Teil-Pilotsequenzen miteinander kombiniert, indem die Signalauswertevorrichtung (12) die Beträge der Werte der Entscheidungsvariablen ($d_i[k]$) addiert.

4. Empfänger (10) nach Anspruch 1 oder 2, wobei die Signalauswertevorrichtung (12) die für die Teil-Pilotsequenzen ermittelten Werte der Entscheidungsvariablen ($d_i[k]$) zusammen für die Teil-Pilotsequenzen miteinander kombiniert, indem die Signalauswertevorrichtung (12) eine Summe der Beträge eines Realteils und eines Imaginärteils der Werte der Entscheidungsvariablen ($d_i[k]$) bildet.

5. Empfänger (10) nach Anspruch 1 oder 2, wobei die Signalauswertevorrichtung (12) die für die Teil-Pilotsequenzen ermittelten Werte der Entscheidungsvariablen ($d_i[k]$) zusammen für die Teil-Pilotsequenzen miteinander kombiniert, indem die Signalauswertevorrichtung (12) die Betragsquadrate der Werte der Entscheidungsvariablen ($d_i[k]$) auf-summiert.

6. Empfänger (10) nach Anspruch 1 oder 2, wobei die Signalauswertevorrichtung (12) die für die Teil-Pilotsequenzen ermittelten Werte der Entscheidungsvariablen ($d_i[k]$) zusammen für die Teil-Pilotsequenzen kohärent unter Beachtung von Betrag und Phase der Werte der Entscheidungsvariablen ($d_i[k]$) miteinander kombiniert.

7. Empfänger (10) nach einem der Ansprüche 1 bis 6, wobei die Signalauswertevorrichtung (12) die ermittelten Werte der Entscheidungsvariablen ($d_i[k]$) unter Einbeziehung von Gewichtungsfaktoren miteinander kombiniert.

8. Empfänger (10) nach einem der Ansprüche 1 bis 6, wobei die Signalauswertevorrichtung (12) die ermittelten Werte der Entscheidungsvariablen ($d_i[k]$) unter Einbeziehung von sich jeweils auf die Teil-Pilotsequenzen beziehende Gewichtungsfaktoren miteinander kombiniert.

9. Empfänger (10) nach einem der Ansprüche 1 bis 8, wobei die Signalauswertevorrichtung (12) eine Zeitschätzung für einen Zeitversatz zwischen einem Referenz-Zeitpunkt einer Aussendung eines jeweiligen Teilpakets und einem für die Auswertung des jeweiligen Teilpakets für den Referenz-Zeitpunkt angenommenen und/oder geschätzten Wert durchführt, indem die Signalauswertevorrichtung (12) ausgehend von einem durch die Bestimmung des Maximum-Werts erhaltenen Maximalwert und mindestens einem hinsichtlich einer Zeitvariable zum Maximalwert benachbarten Wert einen Zeit-Schätzwert für einen Zeitversatz ermittelt.

10. Empfänger (10) nach einem der Ansprüche 1 bis 9,
wobei die Signalauswertevorrichtung (12) eine Frequenzschätzung für die Frequenzdifferenz durchführt, indem die Signalauswertevorrichtung (12) ausgehend von einem durch die Bestimmung des Maximum-Werts erhaltenen Maximalwert und mindestens einem hinsichtlich einer Frequenzvariable zum Maximalwert benachbarten Wert einen Frequenz-Schätzwert ermittelt.

11. Verfahren zum Synchronisieren von einem Empfänger (10) mit einem Sender (1),

wobei mindestens ein von dem Sender (1) ausgesendetes Signal von dem Empfänger (10) empfangen wird,
wobei ausgehend von einer Pilotsequenz oder einer Teil-Pilotsequenz des empfangenen Signals eine Synchronisation des Empfängers (10) mit dem Sender (1) vorgenommen wird,
wobei durch den Empfänger (10) mehrere von dem Sender (1) ausgesendete Teilpakete empfangen werden, auf die ein Telegramm aufgeteilt ist, das von dem Sender (1) gesendete Daten beinhaltet,
wobei die Teilpakete mit unterschiedlichen Frequenzen und zu unterschiedlichen Zeiten ausgesendet sind,
wobei die Teilpakete jeweils eine Teil-Pilotsequenz aufweisen,
wobei die Teilpakete kürzer als das Telegramm sind,
wobei die Teil-Pilotsequenzen sich zu einer Pilotsequenz ergänzen,
wobei ausgehend von den Teil-Pilotsequenzen der Empfänger (10) mit dem Sender (1) synchronisiert wird,
wobei zu jedem Zeitpunkt k L Abtastwerte im Symbolabstand entnommen und mit L konjugiert komplexen Symbolen der Teil-Pilotsequenzen multipliziert werden und ausgehend von dem Ergebnis der Multiplikation und unter Anwendung des DFT-Verfahrens ein Wert für eine Frequenzdifferenz zwischen einer Sendefrequenz des Senders (1) und einer Empfangsfrequenz des Empfängers (10) ermittelt wird, indem für jede Teil-Pilotsequenz Werte von Entscheidungsvariablen ($d_i[k]$) ermittelt werden, indem die ermittelten Werte der Entscheidungsvariablen ($d_i[k]$) über alle Teil-Pilotsequenzen miteinander kombiniert werden und indem mit den kombinierten Werten eine Bestimmung eines Maximum-Werts durchgeführt wird.

12. Computerprogramm mit einem Programmcode, der bei der Ausführung des Programms durch einen Computer diesen veranlässt, das Verfahren nach Anspruch 11 auszuführen.


**Claims**

1. Receiver (10),

wherein the receiver (10) is configured to receive at least one signal transmitted by a transmitter (1),
wherein the receiver (10) comprises a synchronization device (11),
wherein the synchronization device (11) is configured to synchronize the receiver (10) with the transmitter (1) on the basis of the received signal,
wherein the receiver (10) comprises a signal evaluation device (12),
wherein the signal evaluation device (12) determines data for the synchronization from the received signal and transmits them to the synchronization device (11) for the synchronization,
wherein the receiver (10) is configured to receive a plurality of subpackets, transmitted by the transmitter (1), onto which a telegram, containing data transmitted by the transmitter (1), is subdivided,
wherein the subpackets are transmitted with different frequencies at different times,
wherein the subpackets each comprise a subpilot sequence,
wherein subpackets are shorter than a single telegram comprising the transmitted data,
wherein the subpilot sequences complement each other to form a pilot sequence, and
wherein the signal evaluation device (12) retrieves, at each time k, L sample values in the symbol distance and multiplies them with L conjugated complex symbols of the subpilot sequences, and, on the basis of the result of the multiplication and using the DFT method, a value for a frequency difference between a transmission frequency of the transmitter (1) and a receive frequency of the receiver (10), by the signal evaluation device (12) determining values of decision variables ($d_i[k]$) for each subpilot sequence, combining the determined values of the decision variables ($d_i[k]$) with one another via the subpilot sequences and carrying out a determination of a maximum value with the combined values.

2. Receiver (10) as claimed in claim 1, wherein the signal evaluation device (12) determines the values of the decision

variables ($d_i[k]$) for each subpilot sequence, by the signal evaluation apparatus (12) forming multiplication values of a multiplication of samples of the respective subpilot sequence with conjugated complex values of an equal number of reference symbols of a known reference sequence and with samples of the complex exponential oscillation for a plurality of frequencies of a complex exponential oscillation referred to as frequency hypotheses, and summing up the multiplication values.

3. Receiver (10) as claimed in claim 1 or 2, wherein the signal evaluation device (12) combines the values of the decision variable ($d_i[k]$) determined for the subpilot sequences together for the subpilot sequences by the signal evaluation device (12) adding the amounts of the values of the decision variable ($d_i[k]$).

4. Receiver (10) as claimed in claim 1 or 2, wherein the signal evaluation device (12) combines the values of the decision variable ($d_i[k]$) determined for the subpilot sequences together for the subpilot sequences by the signal evaluation device (12) forming a sum of the magnitudes of a real part and an imaginary part of the values of the decision variable ($d_i[k]$).

5. Receiver (10) as claimed in claim 1 or 2, wherein the signal evaluation device (12) combines the values of the decision variable ($d_i[k]$) determined for the subpilot sequences together for the subpilot sequences by the signal evaluation device (12) summing up the magnitude squares of the values of the decision variable ($d_i[k]$).

6. Receiver (10) as claimed in claim 1 or 2, wherein the signal evaluation device (12) coherently combines the values of the decision variable ($d_i[k]$) determined for the subpilot sequences together for the subpilot sequences taking into account the amount and phase of the values of the decision variable ($d_i[k]$).

7. Receiver (10) as claimed in one of claims 1 to 6, wherein the signal evaluation device (12) combines the determined values of the decision variables ($d_i[k]$) with one another taking into account weighting factors.

8. Receiver (10) as claimed in one of the claims 1 to 6, wherein the signal evaluation device (12) combines the determined values of the decision variables ($d_i[k]$) with inclusion of weighting factors relating respectively to the subpilot sequences.

9. Receiver (10) as claimed in one of claims 1 to 8,
   wherein the signal evaluation device (12) carries out a time estimate for a time offset between a reference point in time of a transmission of a respective subpacket and a value assumed and/or estimated for the evaluation of the respective subpacket for the reference point in time, by the signal evaluation device (12) determining a time estimate value for a time offset on the basis of a maximum value obtained by determining the maximum value and at least one value adjacent to the maximum value with respect to a time variable.

10. Receiver (10) as claimed in one of claims 1 to 9,
    wherein the signal evaluation device (12) carries out a frequency estimate for the frequency difference by the signal evaluation device (12) determining a frequency estimate based on a maximum value obtained by determining the maximum value and at least one value adjacent to the maximum value with respect to a frequency variable.

11. Method for synchronizing a receiver (10) with a transmitter (1),

    wherein at least one signal transmitted by the transmitter (1) is received by the receiver (10),
    wherein the receiver (10) is synchronized with the transmitter (1) on the basis of a pilot sequence or a subpilot sequence of the received signal,
    wherein the receiver (10) receives a plurality of subpackets, transmitted by the transmitter (1), onto which a telegram, containing data transmitted by the transmitter (1), is subdivided,
    wherein the subpackets are transmitted with different frequencies at different times,
    wherein the subpackets each comprise a subpilot sequence,
    wherein subpackets are shorter than a single telegram comprising the transmitted data,
    wherein the subpilot sequences complement each other to form a pilot sequence,
    wherein the receiver (10) is synchronized with the transmitter (1) starting from the subpilot sequences,
    wherein, at each time k, L sample values in the symbol distance are retrieved and multiplied with L conjugated complex symbols of the subpilot sequences, and, on the basis of the result of the multiplication and using the DFT method, a value for a frequency difference between a transmission frequency of the transmitter (1) and a receive frequency of the receiver (10), determining values of decision variables ($d_i[k]$) for each subpilot sequence, combining the determined values of the decision variables ($d_i[k]$) with one another via the subpilot sequences and carrying out a determination of a maximum value with the combined values.

12. Computer program with a program code causing, when the program is carried out by a computer, the same to carry out the method as claimed in claim 11.


**Revendications**

1. Récepteur (10),

 dans lequel le récepteur (10) est conçu de manière à recevoir au moins un signal émis par un émetteur (1),
 dans lequel le récepteur (10) présente un moyen de synchronisation (11), dans lequel le moyen de synchronisation (11) est conçu de manière à effectuer une synchronisation du récepteur (10) avec l'émetteur (1) à partir du signal reçu,
 dans lequel le récepteur (10) présente un moyen d'évaluation de signal (12),
 dans lequel le moyen d'évaluation de signal (12) détermine, à partir du signal reçu, des données pour la synchronisation et les transmet au moyen de synchronisation (11) pour la synchronisation,
 dans lequel le récepteur (10) est conçu de manière à recevoir plusieurs paquets partiels émis par l'émetteur (1), sur lesquels un télégramme est partagé et contient des données émises par l'émetteur (1),
 dans lequel les paquets partiels sont émis avec des fréquences différentes et à des moments différents,
 dans lequel les-paquets partiels présentent respectivement une séquence pilote partielle,
 dans lequel les paquets partiels sont plus courts qu'un seul télégramme présentant les données émises,
 dans lequel les séquences pilotes partielles s'ajoutent à une séquence pilote, et
 dans lequel le moyen d'évaluation de signal (12) prélève à chaque temps k L valeurs d'échantillons dans la distance de symbole et les multiplie avec L symboles complexes conjugués des séquences pilotes partielles et, à partir du résultat de la multiplication et en appliquant la méthode DFT, détermine une valeur pour une différence de fréquence entre une fréquence d'émission de l'émetteur (1) et une fréquence de réception du récepteur (10), où le moyen d'évaluation de signal (12) détermine des valeurs de variables de décision ($d_i[k]$) pour chaque séquence pilote partielle, combine les unes aux autres les valeurs déterminées des variables de décision ($d_i[k]$) sur les séquences pilotes partielles et, avec les valeurs combinées, réalise une définition d'une valeur maximale.

2. Récepteur (10) selon la revendication 1, dans lequel le moyen d'évaluation de signal (12) pour chaque séquence pilote partielle détermine les valeurs des variables de décision ($d_i[k]$), où le moyen d'évaluation de signal (12) forme, pour une pluralité de fréquences désignées en tant qu'hypothèses de fréquences d'une oscillation exponentielle complexe, des valeurs de multiplication d'une multiplication de valeurs d'échantillons de la séquence pilote partielle respective avec des valeurs complexes conjuguées d'un nombre identique de symboles de référence d'une séquence de référence connue et avec des valeurs d'échantillons de l'oscillation exponentielle complexe et totalise les valeurs de multiplication.

3. Récepteur (10) selon la revendication 1 ou 2, dans lequel le moyen d'évaluation de signal (12) combine les unes aux autres les valeurs déterminées pour les séquences pilotes partielles des variables de décision ($d_i[k]$) ensemble pour les séquences pilotes partielles, où le moyen d'évaluation de signal (12) additionne les montants des valeurs des variables de décision ($d_i[k]$).

4. Récepteur (10) selon la revendication 1 ou 2, dans lequel le moyen d'évaluation de signal (12) combine les unes aux autres les valeurs déterminées pour les séquences pilotes partielles des variables de décision ($d_i[k]$) ensemble pour les séquences pilotes partielles, où le moyen d'évaluation de signal (12) forme une somme des montants d'une partie réelle et d'une partie imaginaire des valeurs des variables de décision ($d_i[k]$).

5. Récepteur (10) selon la revendication 1 ou 2, dans lequel le moyen d'évaluation de signal (12) combine les unes aux autres les valeurs déterminées pour les séquences pilotes partielles des variables de décision ($d_i[k]$) ensemble pour les séquences pilotes partielles, où le moyen d'évaluation de signal (12) totalise les modules aux carrés des valeurs des variables de décision ($d_i[k]$).

6. Récepteur (10) selon la revendication 1 ou 2, dans lequel le moyen d'évaluation de signal (12) combine les unes aux autres les valeurs déterminées pour les séquences pilotes partielles des variables de décision ($d_i[k]$) ensemble pour les séquences pilotes partielles de manière cohérente en prenant en considération le montant et la phase des valeurs

29

des variables de décision ($d_i[k]$).

7. Récepteur (10) selon une des revendications 1 à 6, dans lequel le moyen d'évaluation de signal (12) combine les unes aux autres les valeurs déterminées des variables de décision ($d_i[k]$) en intégrant des coefficients de pondération.

8. Récepteur (10) selon une des revendications 1 à 6, dans lequel le moyen d'évaluation de signal (12) combine les unes aux autres les valeurs déterminées des variables de décision ($d_i[k]$) en intégrant des coefficients de pondération qui se réfèrent respectivement aux séquences pilotes partielles.

9. Récepteur (10) selon une des revendications 1 à 8,
dans lequel le moyen d'évaluation de signal (12) réalise une estimation temporelle pour un décalage temporel entre un temps de référence d'une émission d'un paquet partiel respectif et une valeur supposée et/ou estimée pour l'évaluation du paquet partiel respectif pour le temps de référence, où le moyen d'évaluation de signal (12) détermine une valeur d'estimation temporelle pour un décalage temporel à partir d'une valeur maximale obtenue par la définition de la valeur maximale et d'au moins une valeur adjacente à la valeur maximale concernant une variable temporelle.

10. Récepteur (10) selon une des revendications 1 à 9,
dans lequel le moyen d'évaluation de signal (12) réalise une estimation de fréquence pour la différence de fréquence, où le moyen d'évaluation de signal (12) détermine une valeur d'estimation de fréquence à partir d'une valeur maximale obtenue par la définition de la valeur maximale et d'au moins une valeur adjacente à la valeur maximale concernant une variable de fréquence.

11. Procédé de synchronisation d'un récepteur (10) avec un émetteur (1),

dans lequel au moins un signal émis par l'émetteur (1) est reçu par le récepteur (10),
dans lequel, à partir d'une séquence pilote ou d'une séquence pilote partielle du signal reçu, une synchronisation du récepteur (10) avec l'émetteur (1) est effectuée,
dans lequel sont reçus par le récepteur (10) plusieurs paquets partiels émis par l'émetteur (1), sur lesquels un télégramme est partagé et contient des données émises par l'émetteur (1),
dans lequel les paquets partiels sont émis avec des fréquences différentes et à des moments différents,
dans lequel les paquets partiels présentent respectivement une séquence pilote partielle,
dans lequel les paquets partiels sont plus courts que le télégramme,
dans lequel les séquences pilotes partielles s'ajoutent à une séquence pilote,
dans lequel, à partir des séquences pilotes partielles, le récepteur (10) est synchronisé avec l'émetteur (1),
dans lequel à chaque temps k L valeurs d'échantillons sont prélevées dans la distance de symbole et sont multipliées avec L symboles complexes conjugués des séquences pilotes partielles et, à partir du résultat de la multiplication et en appliquant la méthode DFT, une valeur pour une différence de fréquence entre une fréquence d'émission de l'émetteur (1) et une fréquence de réception du récepteur (10) est déterminée, où des valeurs de variables de décision ($d_i[k]$) sont déterminées pour chaque séquence pilote partielle, où les valeurs déterminées des variables de décision ($d_i[k]$) sont combinées les unes aux autres sur toutes les séquences pilotes partielles et où, avec les valeurs combinées, une définition d'une valeur maximale est réalisée.

12. Programme d'ordinateur avec un code de programme qui, lors de l'exécution du programme par un ordinateur, amène celui-ci à exécuter le procédé selon la revendication 11.

Fig. 1

Fig. 2

EP 3 876 491 B1

Fig. 3

Fig. 4

Fig. 5

EP 3 876 491 B1

Fig. 6

Fig. 7

Fig. 8

Fig. 9

EP 3 876 491 B1

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082098 A1
- EP 2914039 A1
- EP 2016057014 W

**In der Beschreibung aufgeführte Nicht-Patentliteratur**

- **Z. Y. CHOI** ; **Y. H. LEE**. Frame synchronization in the presence of frequency offset. *Communications, IEEE Transactions on*, 2002, vol. 50 (7), 1062-1065
- **SUST, M.K.** ; **KAUFMANN, R. F.** ; **MOLITOR, F.** ; **BJORNSTROM, G.A.** Rapid acquisition concept for voice activated CDMA communication. *IEEE Global Telecommunications Conference*, 1990, vol. 3, 1820-1826
- **G. KILIAN** ; **H. PETKOV** ; **R. PSIUK** ; **H. LIESKE** ; **F. BEER** ; **J. ROBERT** ; **A. HEUBERGER**. Improved coverage for low-power telemetry systems using telegram splitting. *Proceedings of 2013 European Conference on Smart Objects, Systems and Technologies (SmartSysTech)*, 2013
- **G. KILIAN** ; **M. BREILING** ; **H. H. PETKOV** ; **H. LIESKE** ; **F. BEER** ; **J. ROBERT** ; **A. HEUBERGER**. Increasing Transmission Reliability for Telemetry Systems Using Telegram Splitting. *IEEE Transactions on Communications*, March 2015, vol. 63 (3), 949-961
- **WOLFGANG KOCH**. *Skript zum Seminar Empfängersynchronisation am Fraunhofer IIS*, 10 June 2015
- **UWE LAMBRETTE** ; **RALF MEHLAN** ; **HEINRICH MEYR**. Comparison of Demodulation Techniques for MSK. *RWTH Aachen*, 19 September 2016, https://www.ice.rwth-aachen.de/fileadmin/publications/Lambrette95TIRR.pdf
- **KAY, STEVEN M.** Fundamentals of Statistical Signal Processing: Detection theory. Prentice Hall PTR, 1998
- **UMBERTO MENGALI** ; **ALDO N. D'ANDREA**. Synchronization Techniques for Digital Receivers. Plenum Press, 1997
- **WALTER KELLERMANN**. Digital Signal Processing. *Vorlesungsskript vom WS 2016/17, Lehrstuhl für Multimediakommunikation und Signalverarbeitung (LMS) der Friedrich-Alexander-Universität Erlangen-Nürnberg*
- Fundamentals of Statistical Signal Processing. **STEVEN M. KAY**. Detection Theory. Prentice Hall, 1998, vol. 2
- **Z. Y. CHOI** ; **Y. H. LEE**. Frame synchronization in the presence of frequency offset. *IEEE Transactions on Communications*, 2002, vol. 50 (7), 1062-1065